# EUROPEAN PATENT APPLICATION

(11) **EP 4 803 923 A1**
(43) Date of publication of application: **09.09.2026**
(21) Application number: 24884377.3
(22) Date of filing: 09.10.2024
(51) Int. Cl.: G01S 7/481

(54) **LENS ASSEMBLY, RECEIVING MODULE, DETECTION APPARATUS, AND TERMINAL DEVICE**

(30) Priority: 02.11.2023 CN 202311458304
(71) Applicant: Yinwang Intelligent Technologies Co., Ltd., Shenzhen, Guangdong 518110 (CN)
(72) Inventor: LI, Gengyu, Shenzhen, Guangdong 518129 (CN); LIU, Jun, Shenzhen, Guangdong 518129 (CN); LIN, Jiao, Shenzhen, Guangdong 518129 (CN)
(74) Representative: Henselmann, Alexander Gerhard
(86) International application number: PCT/CN2024/123675
(87) International publication number: WO 2025/092373

(57) **Abstract**

Provided are a lens assembly, a receive module, a detection apparatus, and a terminal device that relate to the field of radar technologies, to improve reception efficiency of a scanning lidar. The lens assembly includes a first lens sub-assembly. The first lens sub-assembly includes at least two lenses. The at least two lenses are located between a scanning assembly and a detection module, and are configured to perform beam reduction, in a first direction, on light returned by the scanning assembly. The first direction is orthogonal to a principal optical axis direction. Beam reduction is performed on the returned light in the first direction, so that a beam width of the returned light in the first direction can be reduced, and the returned light cannot be focused on a point. In this way, when the returned light deviates in the first direction due to impact of a walk-off angle, a displacement in the first direction can be reduced through beam reduction, so that a probability of the returned light being incident on the detection module can be increased, effectively improving reception efficiency of the scanning lidar.

## Description

### CROSS-REFERENCE TO RELATED APPLICATIONS

This application claims priority to Chinese Patent Application No. 202311458304.8, filed with the China National Intellectual Property Administration on November 2, 2023 and entitled "LENS ASSEMBLY, RECEIVE MODULE, DETECTION APPARATUS, AND TERMINAL DEVICE", which is incorporated herein by reference in its entirety.

### TECHNICAL FIELD

This application relates to the field of radar technologies, and in particular, to a lens assembly, a receive module, a detection apparatus, and a terminal device.

### BACKGROUND

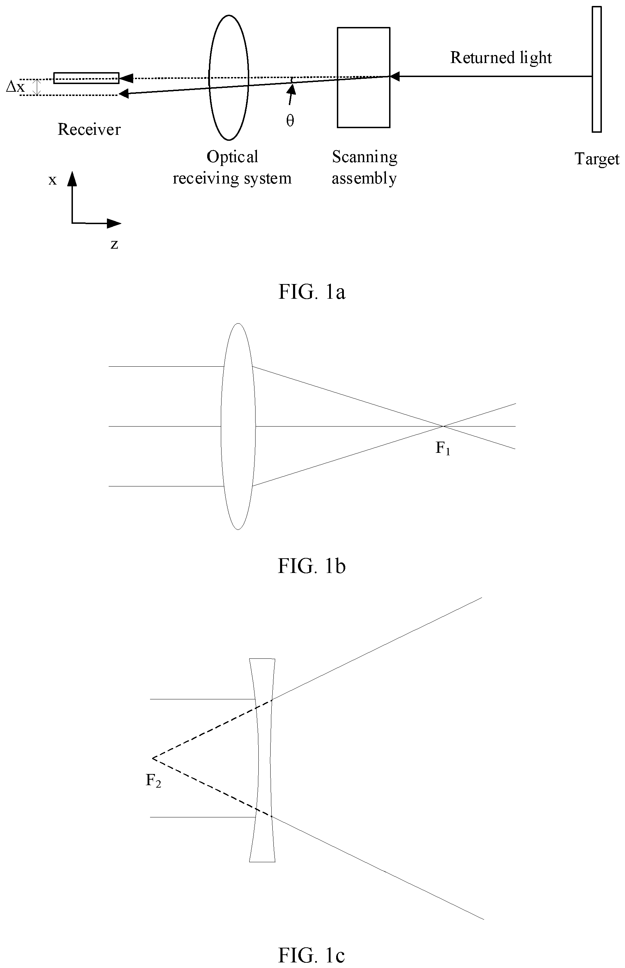

With the development of lidar technologies, scanning lidars have gradually become a mainstream technical solution in the field of lidars due to their advantages such as high power density, long-distance detection, high precision, abundant information acquisition, and strong anti-interference capability. However, due to impact of high-speed rotation of a scanning assembly, there is usually a walk-off (walk off) angle between an actual echo signal and an ideal echo signal in this type of lidar, for example, θ shown in FIG. 1a. The walk-off angle θ results in a displacement Δx of the actual echo signal in an x direction shown in FIG. 1a. Consequently, the actual echo signal cannot accurately focus at a center of a receiver, or even the receiver cannot receive the echo signal in severe cases, greatly reducing reception efficiency of the receiver.

Currently, the reception efficiency is improved usually by increasing a receiving aperture of the receiver or by configuring a plurality of receivers. For example, a receiving aperture of the receiver in the x direction shown in FIG. 1a is increased, or a plurality of receivers are placed in parallel in the x direction shown in FIG. 1a. However, due to process limitations, in some scenarios, even if a receiving aperture reaches a limit of a process, the receiving aperture still fails to cover a displacement of an actual echo signal. Consequently, there is still the problem of low reception efficiency of the receiver. Alternatively, due to process limitations, even if a plurality of receivers are configured, it is difficult to leave no gap between the plurality of receivers. During detection at some distances, if echo signals corresponding to these distances are transmitted exactly to a gap between two receivers, there is still the problem of low reception efficiency of the receivers. Therefore, neither of these two existing solutions can effectively improve reception efficiency of scanning lidars.

In conclusion, how to effectively improve reception efficiency of scanning lidars is an urgent technical problem that needs to be resolved currently.

### SUMMARY

This application provides a lens assembly, a receive module, a detection apparatus, and a terminal device, to improve reception efficiency of a scanning lidar.

According to a first aspect, this application provides a lens assembly, including a first lens sub-assembly, where the first lens sub-assembly includes at least two lenses, and the at least two lenses are located between a scanning assembly and a detection module, and are configured to perform beam reduction, in a first direction, on light returned by the scanning assembly, where the first direction is orthogonal to a principal optical axis direction.

In the foregoing design, beam reduction is performed on returned light in the first direction, so that a beam width of the returned light in the first direction can be reduced, and the returned light cannot be focused on a point. In this way, when the returned light deviates in the first direction due to impact of a walk-off angle, a displacement in the first direction can be reduced through beam reduction, so that a probability of the returned light being incident on the detection module can be increased, effectively improving reception efficiency of the detection module.

In a possible design, the first direction is a direction in which there is impact of a walk-off angle, for example, a fast axis direction. The fast axis direction is a direction in which a light vector in an optical system has a high propagation speed, and in which there is usually impact of a walk-off angle. The walk-off angle is induced by high-speed rotation of the scanning assembly. Beam reduction in the fast axis direction can reduce a degree to which the returned light, when being transmitted in the fast axis direction, is affected by the walk-off angle.

In a possible design, the first lens sub-assembly has no focal power in a second direction, and the second direction is orthogonal to both the first direction and the principal optical axis direction. In other words, the first lens sub-assembly can deflect light in the first direction, and is equivalent to flat glass in the second direction, so that a transmission direction of light in the second direction is not affected.

In a possible design, the at least two lenses are convex lenses or a combination of a convex lens and a concave lens. A convex lens has a focusing function on light, and a concave lens has a divergence function on light. Through combined focusing or through focusing and divergence, beam reduction on the returned light in the first direction x can be implemented according to a simple optical path design, reducing design difficulty of the lens assembly.

In a possible design, the at least two lenses include a first lens and a second lens, the first lens is located between the scanning assembly and the second lens, and the first lens and the second lens are both convex lenses, or the first lens is a convex lens and the second lens is a concave lens. The first lens sub-assembly is configured with two lenses, so that beam reduction on light in the first direction can be implemented by using a minimum quantity of lenses, reducing preparation costs of the lens assembly.

In an example of the foregoing design, when the first lens and the second lens are both convex lenses, a distance between the first lens and the second lens is a sum of a focal length of the first lens and a focal length of the second lens, and the focal length of the first lens is greater than the focal length of the second lens. In this way, light with a large beam width that is incident to the first lens first passes through the first lens with the large focal length, then focuses between the first lens and the second lens, then passes through the second lens with the small focal length, then is transformed into light with a small beam width, and then is emitted from the second lens, to implement beam reduction on the light in the first direction.

In another example of the foregoing design, when the first lens is a convex lens and the second lens is a concave lens, a distance between the first lens and the second lens is a difference between a focal length of the first lens and a focal length of the second lens, and the focal length of the first lens is greater than the focal length of the second lens. In this way, light with a large beam width that is emitted from the first lens first changes into light with a small beam width after traveling a distance less than the focal length of the first lens, then the light is incident on the second lens and is then emitted from the second lens, to implement beam reduction on the light in the first direction.

In an example of the foregoing design, the first lens and the second lens meet the following condition: $\frac{{f}_{1}}{{f}_{2}} = \frac{h}{h ′}$, where f₁ is the focal length of the first lens, f₂ is the focal length of the second lens, h is an object height, and h' is an image height. This configuration allows a ratio of the focal length of the first lens to the focal length of the second lens to meet an object-to-image ratio.

In a possible design, the lens assembly may further include a second lens sub-assembly, and the second lens sub-assembly is configured to perform convergence or beam reduction, in the second direction, on light returned by the scanning assembly, where the second direction is orthogonal to both the first direction and the principal optical axis direction.

In the foregoing design, the second direction may be understood as a direction in which there is no impact of a walk-off angle. Through convergence on the returned light in the second direction, the returned light can be converged to a point at which the detection module is located. In this way, the detection module can receive all the returned light. Alternatively, in consideration of impact of some factors (for example, a position change of the scanning assembly in the second direction due to increased service time), light in the second direction in which there is no impact of a walk-off angle may also deviate. Therefore, beam reduction in the second direction can also reduce a displacement of the returned light in the second direction due to impact of the deviation, and reduce a degree to which the returned light, when being transmitted in the second direction, is affected by the deviation.

In an example of the foregoing design, the second direction may be a slow axis direction, that is, a direction in which a light vector in an optical system has a low propagation speed. The convergence on the returned light in the slow axis direction can meet a requirement of transmitting the returned light to the detection module in the slow axis direction. The beam reduction on the returned light in the slow axis direction can reduce impact of deviation of light transmission in the slow axis direction due to another factor.

In an example of the foregoing design, the second lens sub-assembly has no focal power in the first direction. In other words, the second lens sub-assembly can deflect light in the second direction, and is equivalent to flat glass in the first direction, so that a transmission direction of light in the first direction is not affected.

In an example of the foregoing design, a focal plane or an exit pupil plane of the second lens sub-assembly coincides with an exit pupil plane of the first lens sub-assembly. For example, when the second lens sub-assembly is configured to perform convergence, in the second direction, on the light returned by the scanning assembly, the focal plane of the second lens sub-assembly coincides with the exit pupil plane of the first lens sub-assembly. When the second lens sub-assembly is configured to perform beam reduction, in the second direction, on the light returned by the scanning assembly, the exit pupil plane of the second lens sub-assembly coincides with the exit pupil plane of the first lens sub-assembly. In this way, when the detection module is placed on the focal plane or the exit pupil plane of the second lens sub-assembly, positions of the detection module in the principal optical axis direction can be consistent in the first direction and the second direction, so that the detection module can receive returned light in both the first direction and the second direction.

In an example of the foregoing design, the second lens sub-assembly includes a third lens, and the third lens is a convex lens. The convex lens has a focusing function, and can converge the returned light in the first direction to the focal plane of the second lens sub-assembly, for the light to be received by the detection module placed on the focal plane.

In a further example, a focal length of the third lens is a distance between the third lens and the exit pupil plane of the first lens sub-assembly. In this way, a focal plane of the third lens can coincide with the exit pupil plane of the first lens sub-assembly.

In a possible design, the first lens sub-assembly or the second lens sub-assembly includes a cylindrical lens. The cylindrical lens has a capability of deflecting light in a single direction. Therefore, by using the cylindrical lens, beam reduction on light in the first direction by the first lens sub-assembly can be implemented, and convergence or beam reduction on light in the second direction by the second lens sub-assembly can be implemented.

According to a second aspect, this application provides a receive module, including a scanning assembly, an optical receiving system, and a detection module, where the optical receiving system is configured to perform beam reduction, in a first direction, on light returned by the scanning assembly, and the detection module coincides with an exit pupil position of the optical receiving system.

In the foregoing design, light incident to the optical receiving system undergoes beam reduction by the optical receiving system, and then is emitted from a same region at the exit pupil position. Therefore, through the configuration of the detection module at the exit pupil position, no matter how large a displacement of the returned light in the first direction is, the returned light can be incident to the detection module from the same region at the exit pupil position, effectively reducing a degree to which the light received by the detection module is affected by a walk-off angle. In this way, the detection module can receive light returned during detection at any detection distance, improving reception efficiency of the detection module. In addition, returned light with different displacements is incident to the detection module from the same region. Therefore, the detection module only needs to be assembled when the scanning assembly is in a static state, without adjusting a position of the detection module when the scanning assembly is in a rotating state, thereby further reducing assembly difficulty of the detection module.

In a possible design, the optical receiving system includes the lens assembly according to the first aspect or any one of the designs in the first aspect, for the optical receiving system to have beneficial effects described in any one of the designs in the first aspect.

In a possible design, the detection module includes one or more detectors. When a plurality of detectors are included, the plurality of detectors are arranged in a second direction, and the second direction is orthogonal to both the first direction and a principal optical axis direction. This design can support multi-channel detection in the second direction, and allow light returned from any channel to be received by the one or more detectors in the second direction, so that a detection range can be increased, and detection performance can be maintained.

In an example of the foregoing design, the detector includes a detection array. For example, the detection module includes a large detection array. In this way, light emitted from the optical receiving system can be directly received by the detection array and can be converted into an electrical signal.

In an example of the foregoing design, the detector includes an optical transmission medium and a detection array. For example, the detection module includes a group of optical transmission media and detection arrays, or includes a plurality of groups of optical transmission media and detection arrays. The plurality of groups of optical transmission media and detection arrays are arranged in the second direction. The optical transmission medium is located between the optical receiving system and the detection array, and is configured to transmit received light to the detection array. The detection array is configured to convert the received light into an electrical signal.

In a further possible design, the optical transmission medium is an optical fiber or a waveguide, and the optical fiber or the waveguide can be configured to transmit light.

It should be noted that whether the detector includes a detection array or includes a detection array and an optical transmission medium may be specifically determined according to a radar ranging principle. For example, when a time-of-flight ranging principle is employed, a distance needs to be measured based on a speed and time of light propagation in air. In this case, the detector may include only a detection array, and the detection array is configured to sense arrival time of returned light, so that time of flight of the light in the air can be calculated in combination with emission time of detection light. The time of flight in combination with the light speed suffices for ranging. In another example, when a frequency-modulated continuous wave (frequency-modulated continuous wave, FMCW) ranging principle is employed, a distance needs to be measured based on a frequency change (that is, Doppler effect) and a time difference between returned light and detection light. In this case, the detector may include an optical transmission medium and a detection array. The optical transmission medium is configured to sense a frequency of the returned light, and the detection array is configured to sense arrival time of the returned light. The frequency of the returned light and the arrival time of the returned light can be combined with a frequency of the detection light and emission time of the detection light for ranging.

In a possible design, the scanning assembly is a polyhedral rotating mirror, or a micro-electro-mechanical system (micro-electro-mechanical system, MEMS) galvo mirror or oscillating mirror, or another mirror structure that can implement a scanning function.

In a possible design, the light is continuous light or pulsed light, for example, may be light emitted in an FMCM mode. A specific type of light to be used may be designed based on an actual application scenario, to improve flexibility and universality of the receive module.

According to a third aspect, this application provides a detection apparatus, including the receive module according to the second aspect or any one of the designs in the second aspect. The receive module is configured to convert a received optical signal into an electrical signal.

In a possible design, the detection apparatus may further include a transmit module, and the transmit module is configured to emit light to the scanning assembly.

In an example of the foregoing design, the detection apparatus may further include an optical transmitting system, and the optical transmitting system is located between the transmit module and the scanning assembly, and is configured to shape light emitted by the transmit module. For example, shaping may include light beam collimation and light beam homogenization.

In an example of the foregoing design, the detection apparatus may further include a transmit-receive separation assembly, and the transmit-receive separation assembly is configured to transmit, to the scanning assembly, light emitted by the transmit module, and transmit, to the detection module, light returned by the scanning assembly. In this way, the transmit module and the detection module can be separated, facilitating separate configuration of the optical receiving system corresponding to the detection module.

In a possible design, the detection apparatus may further include a control module, and the control module is configured to process an electrical signal from the receive module, to obtain information associated with a target.

According to a fourth aspect, this application provides a terminal device, including the detection apparatus according to the third aspect or any one of the designs in the third aspect.

For technical effects that can be achieved according to the second aspect to the fourth aspect, refer to the descriptions of beneficial effects in the first aspect. Details are not described herein again.

### BRIEF DESCRIPTION OF DRAWINGS

FIG. 1a is a diagram of an example of a walk-off angle;
FIG. 1b is a diagram of an example of an optical transmission path of a convex lens;
FIG. 1c is a diagram of an example of an optical transmission path of a concave lens;
FIG. 1d is a diagram of an example of a principal optical axis;
FIG. 2 is a diagram of an example of a possible application scenario according to this application;
FIG. 3a is a diagram of an example of optical path transmission of a transmit-receive coaxial lidar;
FIG. 3b is a diagram of an example of an architecture of a transmit-receive separated detection apparatus;
FIG. 3c is a diagram of an example of an architecture of a detection apparatus with a plurality of receivers;
FIG. 4a is a diagram of an example of a structure of a lens assembly according to this application;
FIG. 4b is a diagram of an example of positions at which a detection module can be disposed according to this application;
FIG. 5 is a diagram of an example of optical path transmission of an existing optical receiving system;
FIG. 6 is a diagram of an example of a structure of another lens assembly according to this application;
FIG. 7 is a diagram of an example of a specific structure of a lens assembly according to this application;
FIG. 8a is a diagram of an example of a lens combination of a first lens sub-assembly according to this application;
FIG. 8b is a diagram of an example of another lens combination of a first lens sub-assembly according to this application;
FIG. 9a is a diagram of an example of a sequence of placement of lens sub-assemblies according to this application;
FIG. 9b is a diagram of an example of another sequence of placement of lens sub-assemblies according to this application;
FIG. 10a is a diagram of an example of a distance relationship between lenses according to this application;
FIG. 10b is a diagram of an example of another distance relationship between lenses according to this application;
FIG. 10c is a diagram of an example of still another distance relationship between lenses according to this application;
FIG. 10d is a diagram of an example of yet still another distance relationship between lenses according to this application;
FIG. 11 is a diagram of an example of a specific structure of another lens assembly according to this application;
FIG. 12 is a diagram of an example of an architecture of a receive module according to this application;
FIG. 13a is a diagram of an example of a structure of a detection module according to this application;
FIG. 13b is a diagram of an example of a structure of another detection module according to this application;
FIG. 14 is a diagram of an example of a design of a receive module according to this application;
FIG. 15 is a diagram of an example of a simulation result of light spots received at an exit pupil position according to this application; and
FIG. 16 is a diagram of an example of an architecture of a detection apparatus according to this application.

### DESCRIPTION OF EMBODIMENTS

The following describes in detail embodiments of this application with reference to accompanying drawings.

Some terms in this application are described below. It should be noted that these descriptions are for ease of understanding by a person skilled in the art, and are not intended to limit the protection scope claimed by this application.

### 1. Walk-off (walk off) angle

As shown in FIG. 1a, in a transmit-receive coaxial scanning lidar, after detection light emitted from a scanning assembly is reflected by a target back to the scanning assembly, if the scanning assembly reflects returned light at a scanning angle at which the detection light is emitted, a transmission path of the returned light that is shown by a dashed line in the figure is obtained. However, due to high-speed rotation of the scanning assembly, the scanning angle of the scanning assembly changes. If the scanning assembly reflects the returned light at the scanning angle, a transmission path of the returned light that is shown by a solid line in the figure is obtained. An included angle θ between the transmission path of the returned light that is shown by the solid line and the transmission path of the returned light that is shown by the dashed line is a walk-off angle. The walk-off angle θ is related to an angular velocity of the scanning assembly and time of flight. The time of flight may be understood as duration between time at which the scanning assembly emits the detection light and time at which the scanning assembly receives the returned light. When a light speed is fixed, the time of flight is directly proportional to a detection distance (that is, the distance between the scanning assembly and the target). Therefore, it may also be understood that the walk-off angle θ is related to the angular velocity of the scanning assembly and the detection distance. For example, through derivation, when an angular velocity of the scanning assembly is 3000 revolutions per minute (r/min) and a detection distance between the target and the scanning assembly is 150 m, a walk-off angle θ is approximately 0.036°. Due to the walk-off angle θ, the returned light, when being transmitted to a receive side, deviates away from the center of a receiver in the x direction shown in the figure, and then there is a specific displacement between the returned light and the receiver, for example, Δx shown in FIG. 1a.

### 2. Lens

A lens is a transparent optical component that affects wavefront curvature of light that passes through the lens. Light enters from one side and exits from the other side. A function of the lens is to change wavefront curvature of light, that is, to focus or defocus the light. For example, a beam of collimated light with an approximately flat wavefront is transformed into light with a curved wavefront, and is then focused to a focus. This lens is used as a focusing lens, and is also referred to as a convex lens, as shown in FIG. 1b. A same lens as above may also transform divergent light into collimated light. In this case, the lens is used as a collimating lens, as shown in FIG. 1b, as long as light is incident from the right side. A lens with a concave surface can transform collimated or converged light into divergent light, as shown in FIG. 1c. This lens may also be configured to transform a divergent light beam into a collimated light beam, as shown in FIG. 1c, as long as a light beam is incident from the right side.

### 3. Principal optical axis

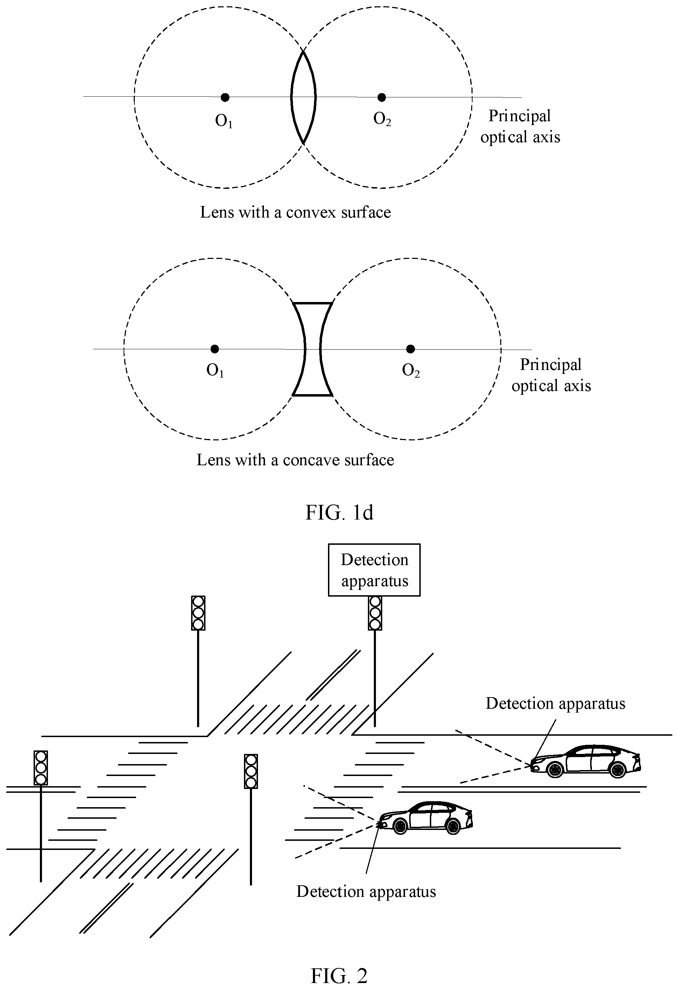

A principal optical axis is a straight line that passes through centers of two spherical surfaces of a lens, and is also referred to as a principal axis, as shown in FIG. 1d. A plane that passes through a focus of a lens (for example, a front focus of a lens with a convex surface, with reference to a focus F1 in FIG. 1b, or an object-space focus of a lens with a concave surface, with reference to a focus F2 in FIG. 1c) and that is perpendicular to a principal optical axis is referred to as a focal plane, also referred to as a front focal plane or an object-space focal plane.

### 4. Focal power

Focal power is equal to a difference between a convergence degree of an image-space light beam and a convergence degree of an object-space light beam, and can represent a capability of an optical element to deflect a light beam. The focal power is usually represented by a letter φ. Generally, the focal power is expressed as a reciprocal of an image-space focal length of a lens (assuming that a refractive index of air is approximately 1). The focal power is in a unit of diopter (D), where 1 diopter (D) = 1 m⁻¹.

Due to characteristics such as varying thicknesses of an optical element, refractive index inhomogeneity, and different curvatures of front and back surfaces (a radius of curvature of a convex surface of a lens is a positive number, and a radius of curvature of a concave surface of the lens is a negative number), there is a difference between actual focal power and theoretical focal power of the optical element. Therefore, the actual focal power may also be referred to as equivalent focal power. In the following, unless otherwise stated, focal power is actual focal power of an optical element.

### 5. Fast axis and slow axis

A fast axis is a direction in which a light vector in an optical system has a high propagation speed. A slow axis is a direction in which a light vector in an optical system has a low propagation speed. In a radar system, a fast axis, a slow axis, and a principal optical axis are orthogonal to each other. Light returned by a scanning assembly is usually affected by a walk-off angle on the fast axis, and the walk-off angle is induced by high-speed rotation of the scanning assembly. A two-dimensional scanning assembly usually includes a rotating mirror and an oscillating mirror. A fast axis direction may be understood as a rotation direction of the rotating mirror, and a slow axis direction may be understood as an oscillation direction of the oscillating mirror. A one-dimensional scanning assembly usually includes only a rotating mirror. A fast axis direction may be understood as a rotation direction of the rotating mirror, and a slow axis direction may be understood as a normal direction of a plane formed by a fast axis and a principal optical axis.

### 6. Exit pupil position

In a radar system, an exit pupil position is a position of a common exit where a light beam emitted from each point on an object plane is emitted from the last aperture after passing through an optical system. In simple terms, there is a virtual aperture stop in an optical receiving system of a radar. The virtual aperture stop is located at a position at which all incident light beams fill up an aperture corresponding to the virtual aperture stop. Only light passing through the aperture corresponding to the virtual aperture stop can leave the optical receiving system. The position of the virtual aperture stop is the exit pupil position.

The foregoing describes some terms used in this application, and the following describes possible application scenarios of this application.

In a possible implementation, a lens assembly provided in this application may be integrated into a receive module, the receive module may be integrated into a detection apparatus, and the detection apparatus may be mounted on a vehicle. For example, the detection apparatus may include but is not limited to a lidar. FIG. 2 is a diagram of an example of a possible application scenario according to this application. In this application scenario, an example in which the detection apparatus is mounted on a front bumper of a vehicle is used. It may be understood that the detection apparatus may alternatively be mounted at another position of the vehicle, for example, any one or more positions such as around a vehicle light, around a rearview mirror, near a vehicle door, at a rear bumper, behind a windshield, or on a vehicle roof, to capture ambient environment information of the vehicle. When the detection apparatus is mounted behind a windshield, the detection apparatus has a low requirement on no risk of gravel impact, and does not affect the appearance of the vehicle. In addition, a front windshield provides a window heating and defogging function and a wiper cleaning function.

For example, the detection apparatus is mounted on a vehicle. Refer to FIG. 2. An operating principle of the detection apparatus is as follows: The detection apparatus emits a light beam to a detection region. If there is a target in the detection region, the target can reflect the received light beam (which may also be referred to as returned light or an echo signal) back to the detection apparatus, and then the detection apparatus determines, based on the returned light, information associated with the target. Specifically, the detection apparatus may obtain, in real time or periodically, longitude and latitude, a speed, and an orientation of the vehicle, or information (such as a distance from the target, a speed of the target, and/or a posture of the target) associated with the target (such as another surrounding vehicle, a pedestrian, or an obstacle) in a specific range. Further, optionally, the detection apparatus may send the obtained information to a control apparatus or the like in the vehicle, for the control apparatus to perform path planning, braking, starting, or the like for the vehicle based on the obtained information. For example, a location of the vehicle may be determined based on the longitude and latitude, or a traveling direction and destination of the vehicle in a future period of time may be determined based on the speed and orientation, or a quantity and density of obstacles around the vehicle may be determined based on distances from surrounding objects. Further, optionally, assisted driving, autonomous driving, or the like of the vehicle may be further implemented in combination with a function of an advanced driver assistance system (advanced driver assistance system, ADAS).

It should be understood that the foregoing application scenario is merely an example. The detection apparatus (the detection apparatus includes an optical receiving system provided in this application) provided in this application may be further used in another possible scenario, and is not limited to the scenario shown in the foregoing example. For example, the detection apparatus may also be mounted on a road side unit (road side unit, RSU) to serve as a road-side traffic detection apparatus, to implement intelligent vehicle-road collaborative communication and the like. In another example, the detection apparatus may also be used in another transportation means to serve as an information collection source for path planning, to assist a driver in implementing safe driving or to automatically implement safe driving. The another transportation means may include but is not limited to a ship, an airplane, an unmanned aerial vehicle, a train, a subway, an automated guided vehicle (automated guided vehicle, AGV), or an unmanned transport vehicle. In still another example, the detection apparatus may also be used in a terminal device or a component disposed in the terminal device. The terminal device may be, for example, a smartphone, a smart home device, a smart manufacturing device, a medical device, an industrial device, or a robot. Details are not listed herein one by one. It should be noted that the application scenarios described in this application are intended to describe the technical solutions in this application more clearly, and do not constitute a limitation on the technical solutions provided in this application.

In addition, the foregoing application scenarios may be applied to fields such as self driving, assisted driving, intelligent driving, autonomous driving, connected vehicles, security surveillance, biomedicine, surveying and mapping (such as three-dimensional mapping, and remote sensing and mapping), meteorological research, biomass and vegetation research, air quality monitoring, and aerospace applications.

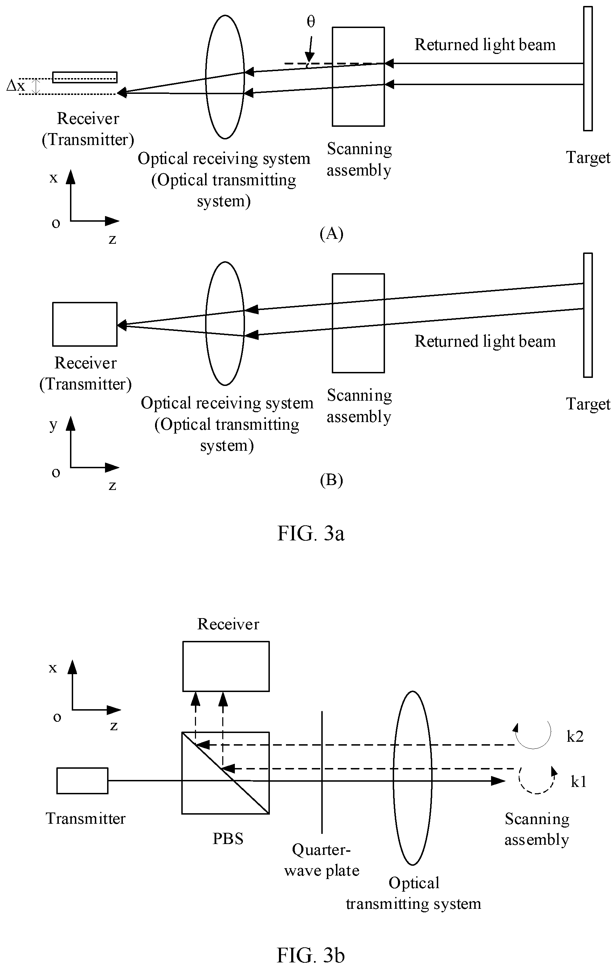

As described in the background, in a scanning lidar, after returned light passes through a scanning assembly, there is a walk-off angle, leading to failure of efficient reception of the returned light by a receiver. This problem is especially significant in a transmit-receive coaxial scanning lidar. For example, FIG. 3a is a diagram of optical path transmission of a transmit-receive coaxial lidar, where (A) in FIG. 3a shows optical path transmission of returned light on an xoz plane, and (B) in FIG. 3a shows optical path transmission of returned light on a yoz plane. The z direction is a principal optical axis direction, the x direction is a fast axis direction, and the y direction is a slow axis direction. As shown in (A) in FIG. 3a and (B) in FIG. 3a, an optical receiving system converges, in both the x direction and the y direction, light returned by a scanning assembly, so that the returned light is converged to a point, where a receiver is located on a plane where the point is located. However, as shown in (A) in FIG. 3a, high-speed rotation of the scanning assembly induces a walk-off angle θ of the returned light in the x direction, so that a position at which the returned light focuses to the receiver deviates by Δx in the x direction. Through convergence, the returned light finally converges in the x direction into a point, and the point is likely to directly deviate away from a position of the receiver due to the displacement Δx. Consequently, the receiver cannot receive the returned light, greatly reducing reception efficiency of the receiver.

To resolve the foregoing problems, the industry provides some solutions as follows.

Solution 1: An architecture of a transmit-receive separated detection apparatus is provided, as shown in FIG. 3b. This architecture, different from that in FIG. 3a, includes a polarization beamsplitter (polarization beamsplitter, PBS) and a quarter-wave plate that are newly added, and includes a transmitter with a small aperture placed on a left side of the PBS, and a receiver with a large aperture placed on an upper side of the PBS. In this way, a light beam emitted by the transmitter (a solid-line light beam shown in the figure) is incident from a left side of the figure to the PBS, then sequentially passes through the PBS, the quarter-wave plate, and an optical transmitting system, and then is transmitted to a scanning assembly. The scanning assembly in a k1 state scans a detection region. After the scanning assembly in a k2 state performs scanning, returned light sequentially passes through the optical transmitting system, the quarter-wave plate, and the PBS, then is reflected to an upper region shown in the figure, and is then received by the receiver with the large aperture. Therefore, based on the architecture of the detection apparatus with the transmitter and the receiver that are separated, a receiving aperture of the receiver can be separately increased, for the receiving aperture to cover a walk-off angle induced due to different k2 and k1 states of the scanning assembly, to eliminate impact of the walk-off angle on a position at which the returned light is focused, improving reception efficiency of the receiver. However, increasing the receive end aperture increases costs and process difficulty, and still fails to cover, due to process limitations, a range affected by the walk-off angle, even if the receiving aperture reaches a process limit value in some cases. Consequently, there is still the problem of low reception efficiency in these cases.

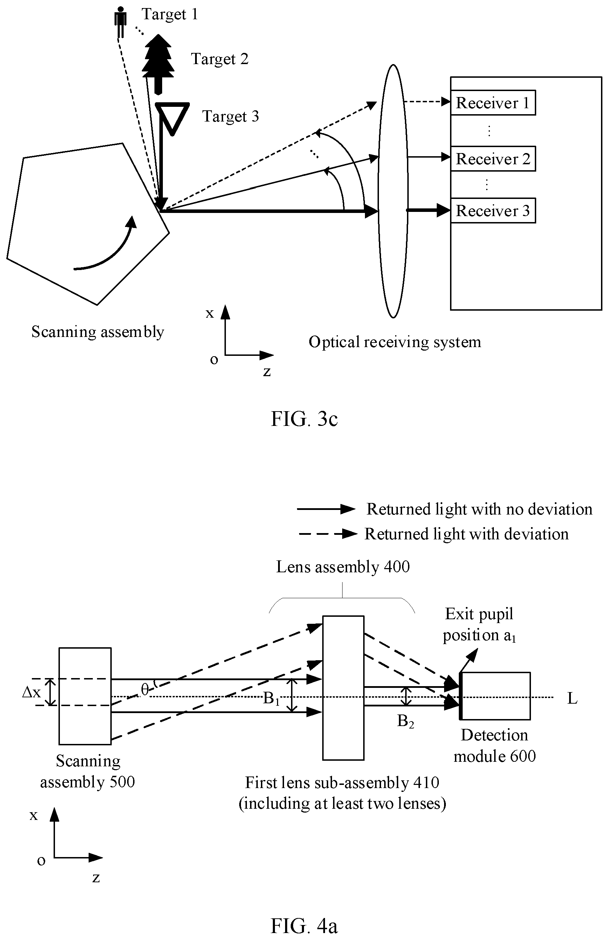

Solution 2: An architecture of a detection apparatus with a plurality of receivers is provided, as shown in FIG. 3c. This architecture, different from that in FIG. 3a, includes a plurality of receivers disposed on a receive side. The plurality of receivers are arranged in the x direction in which there is impact of a walk-off angle, and may be specifically arranged in a region from a position at which there is no impact of the walk-off angle to a position at which there is maximum impact of the walk-off angle. For example, assuming that an emitted light beam is incident to a scanning assembly in a horizontal direction shown in the figure, the position at which there is no impact of the walk-off angle may be understood as a position at which returned light is incident to the receive side in the horizontal direction, for example, a position at which light returned by a target 3 from a corresponding detection distance focuses to a detector 3; and the position at which there is maximum impact of the walk-off angle may be understood as a position at which returned light from the farthest detection distance is incident to the receive side after being reflected by the scanning assembly, for example, a position at which light returned by a target 1 from a corresponding detection distance focuses to a detector 1. In this architecture, the plurality of receivers may be arranged in a vertical direction between the two positions. Based on the architecture of the detection apparatus, when targets at different distances are detected, light beams generated at different deviation positions each are always received by one of the receivers, so that impact of the walk-off angle on reception of a light beam by the receiver can be reduced. However, configuring a plurality of receivers increases process difficulty, material costs, and structural complexity on the receive side, and increases a volume of the detection apparatus. In addition, due to existing process limitations, ideally no gap between different receivers fails to be achieved. Therefore, during detection at some distances, if corresponding returned light is not exactly focused on a central position of a detector, there is still the problem of low reception efficiency.

In conclusion, the two solutions provided in the industry cannot effectively improve reception efficiency on the receive side. Therefore, when a receiver is assembled and adjusted, it is usually necessary to first perform initial assembly when the scanning assembly is in a static state and then adjust a position of the initially assembled receiver based on a generated walk-off angle when the scanning assembly is in a rotating state, leading to difficulty in assembly and adjustment of the receiver in an existing detection apparatus. In addition, even if the position of the receiver is adjusted based on different states of the scanning assembly, the adjusted receiver can only balance detection at different distances, but cannot resolve the problem of low reception efficiency.

In view of this, this application provides a lens assembly. The lens assembly is disposed between a receiving assembly and a detection module, and is configured to perform beam reduction, in a first direction in which there is impact of a walk-off angle, on light returned by the scanning assembly, to reduce a beam width (that is, a width of a light beam) of the returned light in the first direction, to further reduce a displacement of the returned light in the first direction, increase a probability of the returned light being incident on the detection module, and reduce a probability of the detection module failing to receive the returned light, effectively improving reception efficiency of the detection module. Optionally, the lens assembly may be further configured to perform beam reduction, in a second direction in which there is no impact of a walk-off angle, on light returned by the scanning assembly. Because a light spot generated after beam reduction is larger than a light spot generated after focusing, even if there is deviation in the second direction for some reasons (other reasons except the impact of the walk-off angle), there is still some light incident to the detection module in the second direction, reducing a degree to which the light beam received by the detection module in the second direction is affected by the deviation in the second direction.

The following specifically describes a lens assembly and a receive module provided in this application with reference to specific accompanying drawings.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In addition, in this application, "position" does not mean an absolute position, and allows an engineering tolerance. "Distance" does not mean an absolute distance, and allows an engineering tolerance. "Focal length" does not mean an absolute length, and allows an engineering tolerance.

FIG. 4a is a diagram of a structure of a lens assembly according to this application. As shown in FIG. 4a, the lens assembly 400 includes a first lens sub-assembly 410. The first lens sub-assembly 410 includes at least two lenses (not shown in the figure). The at least two lenses are located between a scanning assembly 500 and a detection module 600, and are configured to perform beam reduction, in a first direction (that is, the x direction, referred to as the first direction x below), on light returned by the scanning assembly 500. The first direction x is orthogonal to a principal optical axis (L shown in the figure) direction, and the principal optical axis L direction is the z direction shown in the figure.

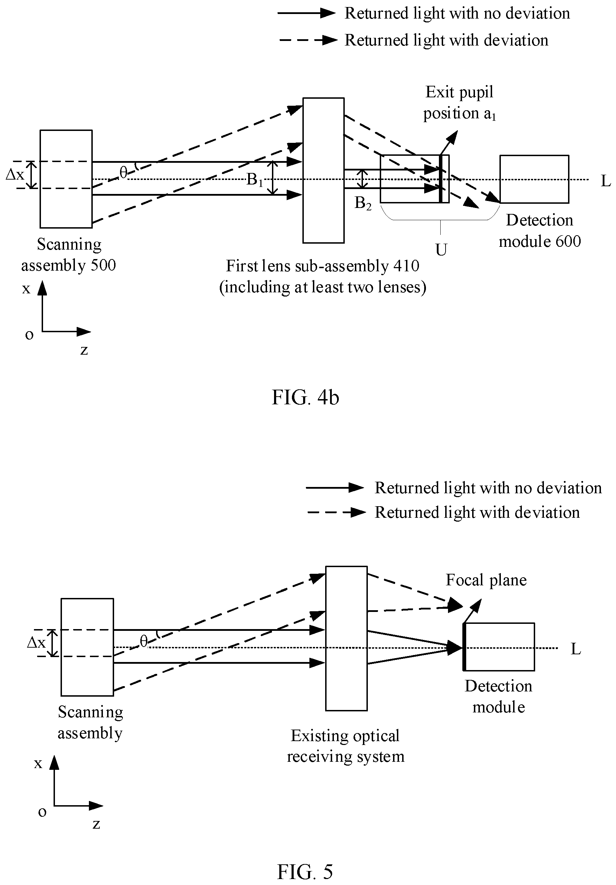

In the foregoing description, performing beam reduction on light in the first direction x by the first lens sub-assembly 410 may be understood as reducing a width of a light beam in the first direction x with a shape of the light beam unchanged. For example, as shown in FIG. 4a, it is assumed that the first lens sub-assembly 410 receives collimated light beams. Light beams shown by two horizontal solid lines in the figure and light beams in a middle region therebetween are returned light reflected by the scanning assembly 500 with no deviation. Light beams shown by two inclined dashed lines in the figure and light beams in a middle region therebetween are returned light reflected by the scanning assembly 500 with deviation. There is a displacement Δx between the returned light with deviation and the returned light with no deviation in the first direction x due to a walk-off angle θ. In this case, based on the lens assembly shown in FIG. 4a, a beam width of a collimated light beam incident to the first lens sub-assembly 410 is B₁ in the first direction x, and after the first lens sub-assembly 410 performs beam reduction on the collimated light beam in the first direction x, the beam width of the emitted collimated light beam is reduced to B₂ in the first direction x. An existing optical receiving system shown in FIG. 5 directly focuses light returned by a scanning assembly 500. Returned light with deviation is focused to a point, and returned light with no deviation is also focused to a point. Therefore, if there is a large displacement Δx, a position at which the returned light with deviation is focused is highly likely to deviate away from a position at which a detection module is located. Consequently, the detection module fails to receive the returned light. However, based on the lens assembly shown in FIG. 4a, the returned light has a beam width reduced in the first direction x, but is not focused to a point. Therefore, even if the returned light deviates, the returned light is highly likely to be at least partially incident on the detection module. For example, as shown in FIG. 4b, returned light with a displacement Δx can be at least partially incident to the detection module 600 regardless of where the detection module 600 is disposed in a range U shown in the figure. However, in the existing optical receiving system shown in FIG. 5, the returned light cannot be received no matter which position the detection module moves forward or backward to. Therefore, compared with the existing optical receiving system, beam reduction in the first direction can increase a probability of the returned light being incident on the detection module in the first direction, and reduce a probability of the detection module failing to receive the returned light, effectively improving reception efficiency of the detection module.

Optionally, the first direction x may be understood as a direction in which there is impact of a walk-off angle, for example, a fast axis direction. The fast axis direction is a vector direction in which light in the lens assembly has a high propagation speed, and in which there is usually impact of a walk-off angle. The walk-off angle is induced by high-speed rotation of the scanning assembly, for example, induced by high-speed rotation of a rotating mirror in a one-dimensional scanning assembly or a two-dimensional scanning assembly. Beam reduction in the fast axis direction can reduce a degree to which the returned light, when being transmitted in the fast axis direction, is affected by the walk-off angle.

Further, optionally, the first lens sub-assembly 410 may perform beam reduction, in the first direction x, on light returned by the scanning assembly 500 to an exit pupil position of the first lens sub-assembly 410, for example, the exit pupil position a₁ shown in FIG. 4a. The exit pupil position a₁ may be understood as a same position to which light returned in different directions is emitted after being deflected by the first lens sub-assembly 410 in the first direction x, and light spots of the light returned in different directions that is emitted to this position have a same centroid. Optionally, at the exit pupil position, a plane perpendicular to the principal optical axis L is referred to as an exit pupil plane. In some scenarios, the detection module 600 may be placed in a region that covers the centroid of light spots and that is at the exit pupil position a₁, so that a receiving surface of the detection module 600 coincides with the exit pupil plane. In this way, regardless of the displacement Δx, in the first direction x, of the light returned by the scanning assembly 500, the returned light can be incident into the detection module 600 from a same region at the exit pupil position a₁, so that impact of the walk-off angle on a light beam received by the detection module 600 can be minimized. In this way, the detection module 600 can receive returned light corresponding to detection at any detection distance, improving reception efficiency of the detection module 600. In addition, returned light at different walk-off angles is incident to the detection module 600 from the same region. Therefore, the detection module 600 only needs to be assembled when the scanning assembly 500 is in a static state, without adjusting a position of the detection module 600 when the scanning assembly 500 is in a rotating state, thereby further reducing assembly difficulty of the detection module 600.

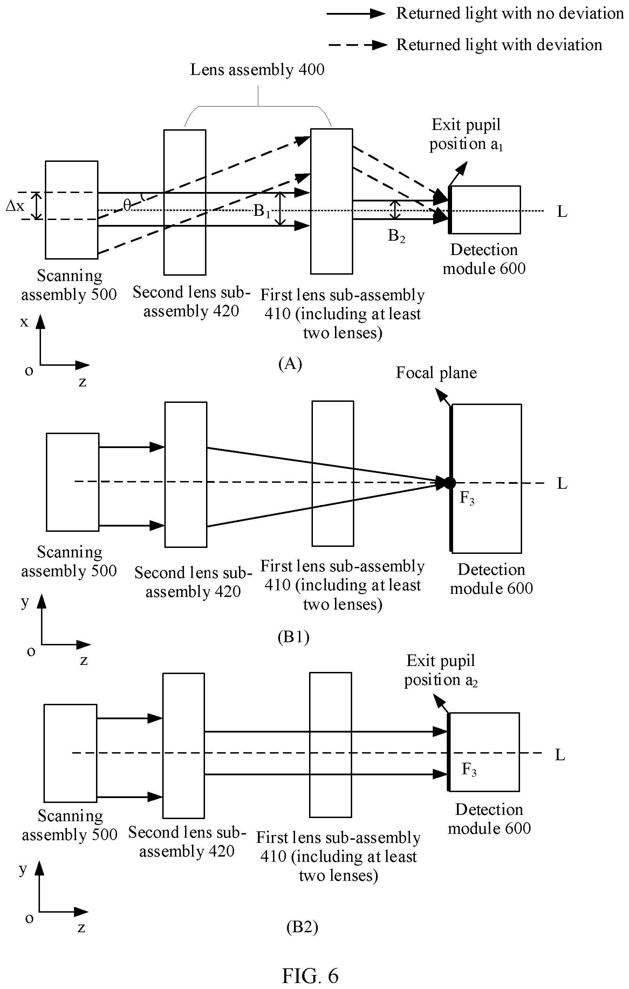

Optionally, FIG. 6 is a diagram of a structure of another lens assembly according to this application. (A) in FIG. 6 shows an optical transmission path of a lens assembly 400 in xoz directions. (B1) in FIG. 6 and (B2) in FIG. 6 show optical transmission paths of the lens assembly 400 in yoz directions. In this example, the lens assembly 400 includes the first lens sub-assembly 410, and may further include a second lens sub-assembly 420. The second lens sub-assembly 420 is configured to perform convergence or beam reduction, in a second direction y, on light returned by the scanning assembly 500, where the second direction y is orthogonal to both the first direction x and the principal optical axis L direction. For example, (B1) in FIG. 6 shows an optical transmission path corresponding to a scenario in which the second lens sub-assembly 420 performs convergence, in the second direction y, on light returned by the scanning assembly 500. In this scenario, the second lens sub-assembly 420 can focus, in the second direction y, the light returned by the scanning assembly 500 to a focal plane of the second lens sub-assembly 420. In another example, (B2) in FIG. 6 shows an optical transmission path corresponding to a scenario in which the second lens sub-assembly 420 performs beam reduction, in the second direction y, on light returned by the scanning assembly 500. In this scenario, the second lens sub-assembly 420 can perform beam reduction, in the second direction y, on the light returned by the scanning assembly 500 to an exit pupil position a₂ of the second lens sub-assembly 420.

Optionally, whether the second lens sub-assembly 420 performs convergence or beam reduction on the returned light may be specifically determined based on deviation of the returned light in the second direction y in a scenario. For example, when there is no deviation in the second direction y of light returned by the scanning assembly 500 in a scenario, the second lens sub-assembly 420 may be configured to perform convergence on the returned light in the second direction y. The convergence requires a simpler lens structure compared with beam reduction. Therefore, a requirement for light beam focusing can be met, and complexity of the lens assembly can be reduced. Conversely, when there is deviation in the second direction y of light returned by the scanning assembly 500 in a scenario, the second lens sub-assembly 420 may be configured to perform beam reduction on the returned light in the second direction y, to reduce a beam width of the light in the second direction y, and then reduce a displacement of the returned light in the second direction y that is induced due to impact of deviation for another reason and increase a probability of the returned light being incident on the detection module 600 in the second direction y, further improving reception efficiency of the detection module 600.

Further, optionally, the second direction y may be a slow axis direction. The slow axis direction is a direction in which a light vector in the lens assembly 400 has a low propagation speed, and in which there is no impact of a walk-off angle. However, a light beam may deviate for some reasons. For example, during initial operation of a two-dimensional scanning assembly, light returned by the two-dimensional scanning assembly usually does not deviate in the slow axis direction. In this case, the second lens sub-assembly 420 may be configured to perform convergence on the returned light in the slow axis direction, to focus all the returned light on the detection module 600. However, as time passes, a position of an oscillating mirror in the two-dimensional scanning assembly may change, then returned light may deviate in the slow axis direction. In this case, the second lens sub-assembly 420 may be configured to perform beam reduction on the returned light in the slow axis direction, to reduce a degree to which the returned light, when being transmitted in the slow axis direction, is affected by the deviation.

The foregoing describes a basic design in the lens assembly 400. The following describes in detail the components separately in FIG. 6, to provide examples of specific implementations.

### 1. First lens sub-assembly

Optionally, the first lens sub-assembly 410 has focal power in the first direction x, and has no focal power in the second direction y. In other words, a lens in the first lens sub-assembly 410 has curvature on one or two surfaces in the first direction x, and can deflect (beam reduction), in the first direction x, light returned by the scanning assembly 500, while the lens is equivalent to flat glass in the second direction y, and directly transmits light without deflection. In this way, the first lens sub-assembly 410 only affects, in the first direction x, a transmission direction of light returned by the scanning assembly 500, but does not affect, in the second direction y, a transmission direction of the light.

Further, optionally, the first lens sub-assembly 410 includes at least two lenses, and the at least two lenses are convex lenses or a combination of a convex lens and a concave lens. A convex lens has a focusing function on light, and a concave lens has a divergence function on light. Through combined focusing or through focusing and divergence, beam reduction on the returned light in the first direction x can be implemented according to a simple optical path design, reducing design difficulty of the lens assembly.

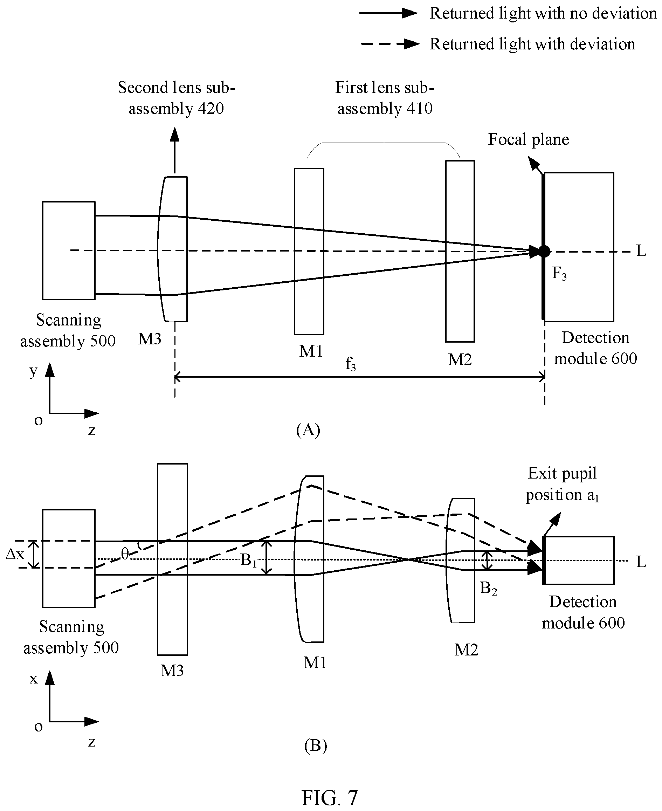

For example, the first lens sub-assembly 410 includes two lenses. FIG. 7 is a diagram of a specific structure of a lens assembly according to this application. (A) in FIG. 7 shows an optical transmission path of the lens assembly on a yoz plane. (B) in FIG. 7 shows an optical transmission path of the lens assembly on an xoz plane. In this example, the first lens sub-assembly 410 includes a first lens M1 and a second lens M2, and the first lens M1 is located between the scanning assembly 500 and the second lens M2. In the figure, an example in which the scanning assembly 500 returns collimated light is used. As shown in (B) in FIG. 7, the first lens M1 may be configured to converge the collimated light returned by the scanning assembly 500, and the second lens M2 may be configured to collimate the converged light from the first lens M1. In this way, on the xoz plane, light emitted from the first lens sub-assembly 410 and light incident to the first lens sub-assembly 410 are both collimated light. The design of parameters such as focal lengths and positions of the first lens M1 and the second lens M2 (refer to the following description) allows a beam width B₂ of the emitted collimated light in the first direction x to be smaller than a beam width B₁ of the incident collimated light in the first direction x, so that beam reduction can be implemented on the collimated light in the first direction x.

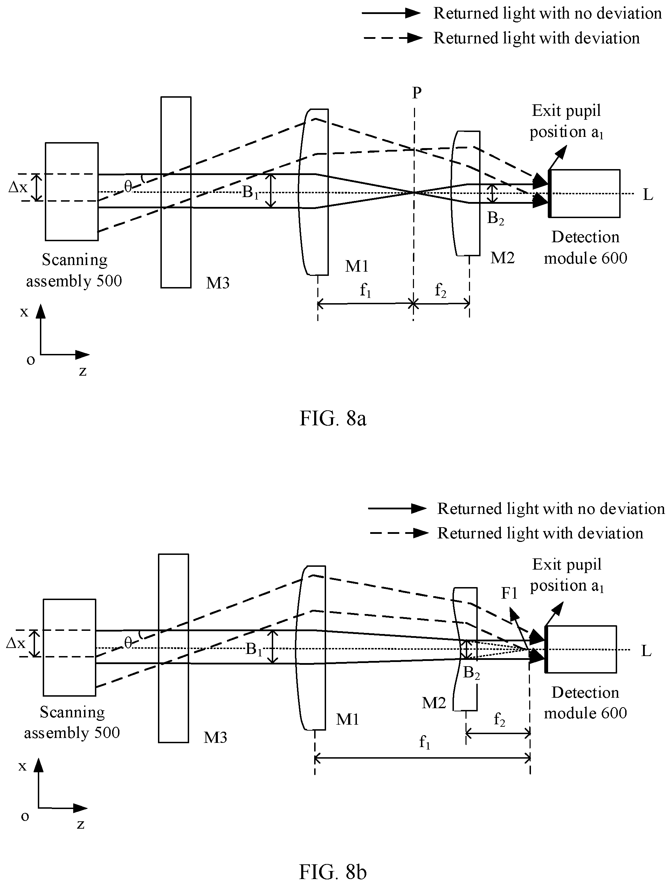

It may be understood that the first lens M1 and the second lens M2 may be convex lenses or a combination of a convex lens and a concave lens. For example, the first lens M1 is a convex lens, and the second lens M2 is a concave lens. FIG. 8a and FIG. 8b respectively show lens parameters in these two possible combinations. The following describes the lens parameters in detail.

In the lens combination 1, as shown in FIG. 8a, the first lens M1 and the second lens M2 are both convex lenses, a distance between the first lens M1 and the second lens M2 is a sum of a focal length f₁ of the first lens M1 and a focal length f₂ of the second lens M2, and the focal length f₁ of the first lens M1 is greater than the focal length f₂ of the second lens M2. In this way, light with a large beam width (the beam width is B₁) that is returned by the scanning assembly 500 first passes through the first lens M1 with the large focal length f₁ and then focuses between the first lens M1 and the second lens M2 (on a plane P as shown in the figure, where the plane P may be understood as a focal plane of the first lens M1 and the second lens M2), then passes through the second lens M2 with the small focal length f₂ and is then transformed into light with a small beam width (the beam width is changed to B₂), and then is emitted from the second lens M2. Optionally, the light returned by the scanning assembly 500 is parallel light. The first lens M1 focuses the parallel light to the focal plane, and then transmits the light to the second lens M2. Then, the second lens M2 collimates the light into parallel light and then emits the parallel light. Therefore, the focal length of the convex second lens is designed to be less than the focal length of the convex first lens, the convex first lens is placed before the convex second lens, and the distance between the convex second lens and the convex first lens is designed to be the sum of the focal length of the convex second lens and the focal length of the convex first lens, so that beam reduction can be implemented on incident light in the first direction.

In the lens combination 2, as shown in FIG. 8b, the first lens M1 is a convex lens and the second lens M2 is a concave lens, a distance between the first lens M1 and the second lens M2 is a difference between a focal length f₁ of the first lens M1 and a focal length f₂ of the second lens M2, and the focal length f₁ of the first lens M1 is greater than the focal length f₂ of the second lens M2. In this way, light with a large beam width (the beam width is B₁) that is returned by the scanning assembly 500 first passes through the first lens M1 with the large focal length f₁ and then converges to the second lens M2. Because a focus F1 of the first lens M1 is located on the right side of the second lens M2, the light that converges to the second lens M2 still has a beam width (the beam width is B₂), and the beam width B₂ is less than the beam width B₁ of the incident light. Then, the light with the beam width B₂ is deflected by the second lens M2 and then emitted, for example, collimated by the second lens M2 into parallel light and then emitted. Therefore, the focal length of the concave second lens is designed to be less than the focal length of the convex first lens, the convex first lens is placed before the convex second lens, and the distance between the concave second lens and the convex first lens is designed to be the difference between the focal length of the concave second lens and the focal length of the convex first lens, so that beam reduction can also be implemented on incident light.

Further, optionally, in any one of the foregoing lens combinations, for the two lenses to implement beam reduction on light in the first direction x, a focal length ratio of the two lenses needs to meet an object-to-image ratio. Specifically, the focal length f₁ of the first lens M1 and the focal length f₂ of the second lens M2 need to meet the following formula (1.1): $\frac{{f}_{1}}{{f}_{2}} = \frac{h}{h ′}$

Herein, h is an object height, and may be understood as a height of a detection target in the first direction x, or may be understood as a beam width of light in the first direction x that is incident to the first lens sub-assembly 410, that is, B₁ shown in FIG. 8a or FIG. 8b; and h' is an image height, and may be understood as a height of an image of the detection target on the detection module 600 side, or may be understood as a beam width of light in the first direction x that is emitted from the first lens sub-assembly 410, that is, B₂ shown in FIG. 8a or FIG. 8b.

Further, optionally, the first lens M1 and the second lens M2 may be both cylindrical lenses. For example, the first lens M1 and the second lens M2 are both convex cylindrical lenses, or the first lens M1 is a convex cylindrical lens and the second lens M2 is a concave cylindrical lens. The cylindrical lens has a capability of deflecting a light beam in a single direction. The first lens M1 and the second lens M2 are configured as cylindrical lenses, and the two cylindrical lenses each are configured with curvature on one or two surfaces in the first direction x, so that light beam reduction in the first direction x can be implemented.

It should be noted that the foregoing describes, by using an example in which the first lens sub-assembly 410 includes two lenses, lens parameters that need to be met by the two lenses. When the first lens sub-assembly 410 includes three or more lenses, lens parameters of these lenses may be designed with reference to the design idea of the foregoing two lenses. For example, the first lens sub-assembly 410 includes three lenses.

In a possible lens combination, all the three lenses are convex lenses. A focal length of a first lens is greater than a distance between the first lens and a second lens, a distance between the second lens and a third lens is equal to a sum of a focal length of the second lens and a focal length of the third lens, and the focal length of the second lens is greater than the focal length of the third lens. In this way, light with a large beam width first passes through the first lens and then focuses to the second lens. Because a focus of the first lens is behind the second lens, the light that focuses on the second lens still has a beam width. The beam width is less than a beam width of the light incident to the first lens. After the light with the beam width passes through the second lens and the third lens (the second lens and the third lens are equivalent to the first lens M1 and the second lens M2 in the lens combination 1), the light is transformed into light with a smaller beam width and emitted to the detection module 600. Therefore, this lens combination can implement beam reduction on light.

In another possible lens combination, the first two lenses are convex lenses, and the last lens is a concave lens. A focal length of a first lens is greater than a distance between the first lens and a second lens, a focal length of the second lens is greater than a focal length of a third lens, and a distance between the second lens and the third lens is equal to a difference between the focal length of the second lens and the focal length of the third lens. In this way, light with a large beam width first passes through the first lens and then focuses to the second lens. Because a focus of the first lens is behind the second lens, the light that focuses on the second lens still has a beam width. The beam width is less than a beam width of the light incident to the first lens. After the light with the beam width passes through the second lens and the third lens (the second lens and the third lens are equivalent to the first lens M1 and the second lens M2 in the lens combination 2), the light is transformed into light with a smaller beam width and emitted to the detection module 600. Therefore, this lens combination can also implement beam reduction on light.

It may be understood that there are many possible lens combinations. These are not listed one by one in this application.

### 2. Second lens sub-assembly

Optionally, the second lens sub-assembly 420 has focal power in the second direction y, and has no focal power in the first direction x. In other words, a lens in the second lens sub-assembly 420 has curvature on one or two surfaces in the second direction y, and can deflect (convergence or beam reduction), in the second direction y, light returned by the scanning assembly 500, while the lens is equivalent to flat glass in the first direction x, and directly transmits light without deflection. In this way, the second lens sub-assembly 420 only affects, in the second direction y, a transmission direction of light returned by the scanning assembly 500, but does not affect, in the first direction x, a transmission direction of the light.

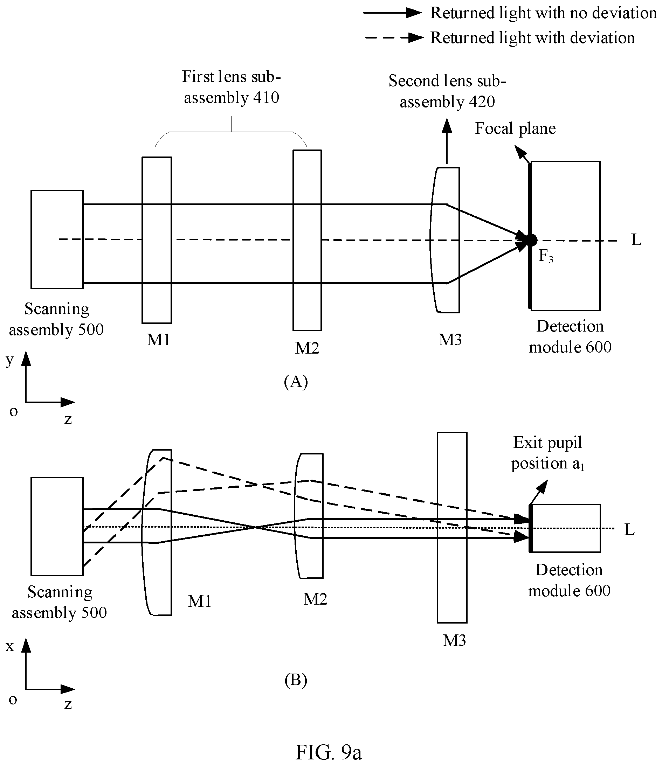

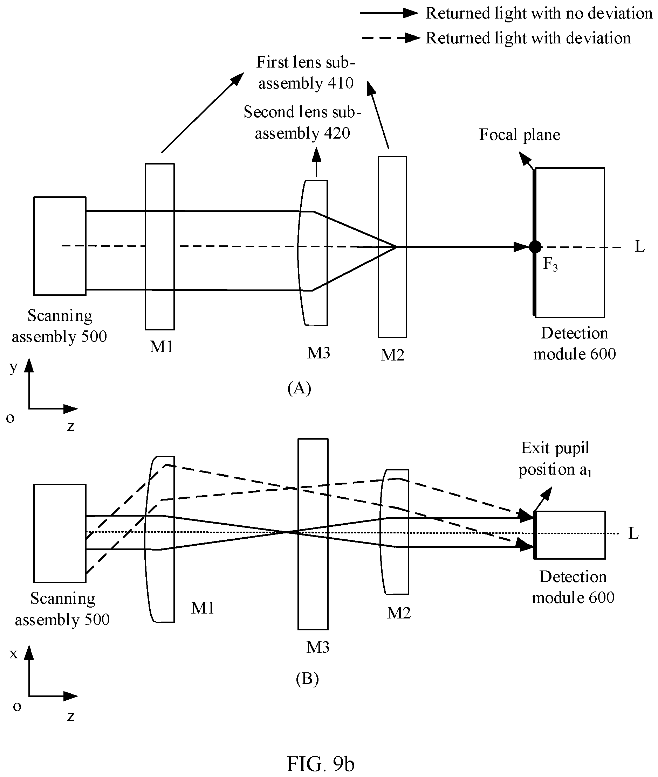

Further, optionally, because the first lens sub-assembly 410 and the second lens sub-assembly 420 each have focal power only in one of two mutually orthogonal directions, any one lens sub-assembly does not affect light beam deflection in the other lens sub-assembly. Therefore, the first lens sub-assembly 410 and the second lens sub-assembly 420 may be disposed at any positions between the scanning assembly 500 and the detection module 600. For example, in the lens assembly shown in FIG. 7, the second lens sub-assembly 420 is placed between the scanning assembly 500 and the first lens sub-assembly 410. Alternatively, the first lens sub-assembly 410 may be placed between the scanning assembly 500 and the second lens sub-assembly 420, as shown in FIG. 9a. Alternatively, the second lens sub-assembly 420 may be placed between any two lenses of the first lens sub-assembly 410, as shown in FIG. 9b. Alternatively, when the second lens sub-assembly 420 includes at least two lenses, the first lens sub-assembly 410 may be placed between any two lenses of the second lens sub-assembly 420. This is not specifically limited.

It may be understood that (A) in FIG. 9a and (A) in FIG. 9b show optical transmission paths of returned light corresponding to different arrangements on the yoz plane, and (B) in FIG. 9a and (B) in FIG. 9b show optical transmission paths of returned light corresponding to different arrangements on the xoz plane. Therefore, regardless of the arrangement of the first lens sub-assembly 410 and the second lens sub-assembly 420, the first lens sub-assembly 410 deflects the returned light only in the first direction x, and a position change of the second lens sub-assembly 420 does not affect a deflection result of the returned light in the first direction x. Similarly, the second lens sub-assembly 420 deflects the returned light only in the second direction y, and a position change of the first lens sub-assembly 410 does not affect a deflection result of the returned light in the second direction y.

Further, optionally, the arrangement of the lens sub-assemblies shown in FIG. 7 is used as an example. When the second lens sub-assembly 420 performs convergence, in the second direction y, on light returned by the scanning assembly 500, the detection module 600 may coincide with a focal plane of the second lens sub-assembly 420. The focal plane of the second lens sub-assembly 420 is a plane that passes through a focus (that is, F₃ shown in FIG. 7) of the second lens sub-assembly 420 and that is perpendicular to the principal optical axis L. Optionally, a receiving surface of the detection module 600 may be on the focal plane of the second lens sub-assembly 420, and cover the focus F₃ and a surrounding region, for the detection module 600 to receive returned light that is focused by the second lens sub-assembly 420 to the focus F₃ or returned light that is focused to the region near the focus F₃ due to an error or another factor.

Further, optionally, still with reference to FIG. 7, to ensure consistency of positions of the detection module 600 in the principal optical axis L direction on the xoz plane and the yoz plane, a focal plane of the second lens sub-assembly 420 and an exit pupil plane (that is, a plane that is at the exit pupil position a₁ and that is perpendicular to the principal optical axis L) of the first lens sub-assembly 410 may be further configured to coincide. In other words, the detection module 600 coincides with both the focal plane of the second lens sub-assembly 420 and the exit pupil plane of the first lens sub-assembly 410. In this way, the second lens sub-assembly 420 can focus, in the second direction y, light returned by the scanning assembly 500 to the focal plane of the second lens sub-assembly 420 (or the exit pupil plane of the first lens sub-assembly 410), for the detection module 600 placed on the focal plane to receive the returned light focused in the second direction y. In addition, the first lens sub-assembly 410 can perform beam reduction, in the first direction x, on light returned by the scanning assembly 500 to the exit pupil plane of the first lens sub-assembly 410 (or the focal plane of the second lens sub-assembly 420), for the detection module 600 placed on the exit pupil plane to receive the returned light obtained after beam reduction in the first direction x. In this way, the detection module 600 can receive more returned light on the xoy plane formed by the first direction x and the second direction y, effectively improving reception efficiency of the detection module 600.

It may be understood that the second lens sub-assembly 420 includes at least one lens, the at least one lens may be a convex lens, and a sum of focal lengths of the at least one lens may be a distance from the at least one lens to the focal plane of the second lens sub-assembly 420. In this way, based on a focusing capability of the at least one lens, light returned by the scanning assembly 500 can be focused to the detection module 600 placed on the focal plane.

For example, the second lens sub-assembly 420 includes one lens. As shown in FIG. 7, the second lens sub-assembly 420 may include a third lens M3, and a focal length f₃ of the third lens M3 is equal to a distance from the third lens M3 to the focal plane of the second lens sub-assembly 420. Because the focal plane of the second lens sub-assembly 420 coincides with the exit pupil plane of the first lens sub-assembly 410, it may also be considered that the focal length f₃ of the third lens M3 is equal to a distance from the third lens M3 to the exit pupil plane of the first lens sub-assembly 410.

It may be understood that an example in which the third lens M3 is located between the scanning assembly 500 and the first lens M1 is used in FIG. 7. However, the third lens M3 may alternatively be located between the second lens M2 and the detection module 600, as shown in FIG. 9a, or may be located between the first lens M1 and the second lens M2, as shown in FIG. 9b. Different placement positions of the third lens M3 lead to different association relationships between the focal length f₃ of the third lens M3 and a focal length of another lens. Examples are shown below.

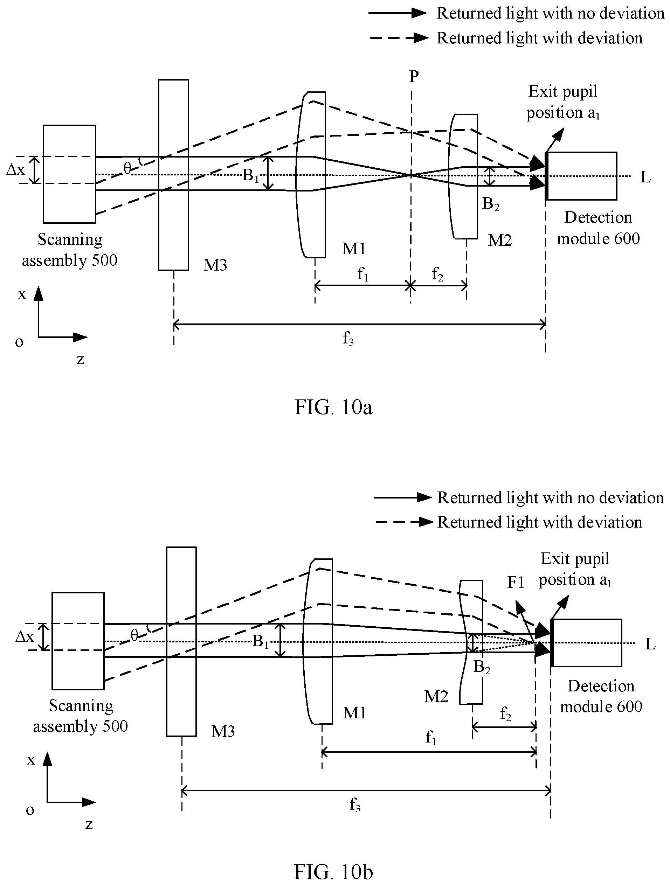

In an example, as shown in FIG. 10a and FIG. 10b, with the placement in a sequence of the third lens M3, the first lens M1, and the second lens M2, the focal length f₃ of the third lens M3 is a sum of a distance between the third lens M3 and the first lens M1, a distance between the first lens M1 and the second lens M2, and a distance between the second lens M2 and the exit pupil plane of the first lens sub-assembly 410. For example, as shown in FIG. 10a, when the first lens M1, the second lens M2, and the third lens M3 are all convex lenses, the focal length f₃ of the third lens M3 is a sum of a distance between the third lens M3 and the first lens M1, the focal length f₁ of the first lens M1, the focal length f₂ of the second lens M2, and a distance between the second lens M2 and the exit pupil plane of the first lens sub-assembly 410. Alternatively, as shown in FIG. 10b, when the first lens M1 and the third lens M3 are convex lenses, and the second lens M2 is a concave lens, the focal length f₃ of the third lens M3 is a sum of a distance between the third lens M3 and the first lens M1, the focal length f₁ of the first lens M1, and a distance between the focus F1 of the first lens M1 and the exit pupil plane of the first lens sub-assembly 410, or is a sum of a distance between the third lens M3 and the first lens M1, a distance between the first lens M1 and the second lens M2, the focal length f₂ of the second lens M2, and a distance between the focus F1 of the second lens M2 and the exit pupil plane of the first lens sub-assembly 410.

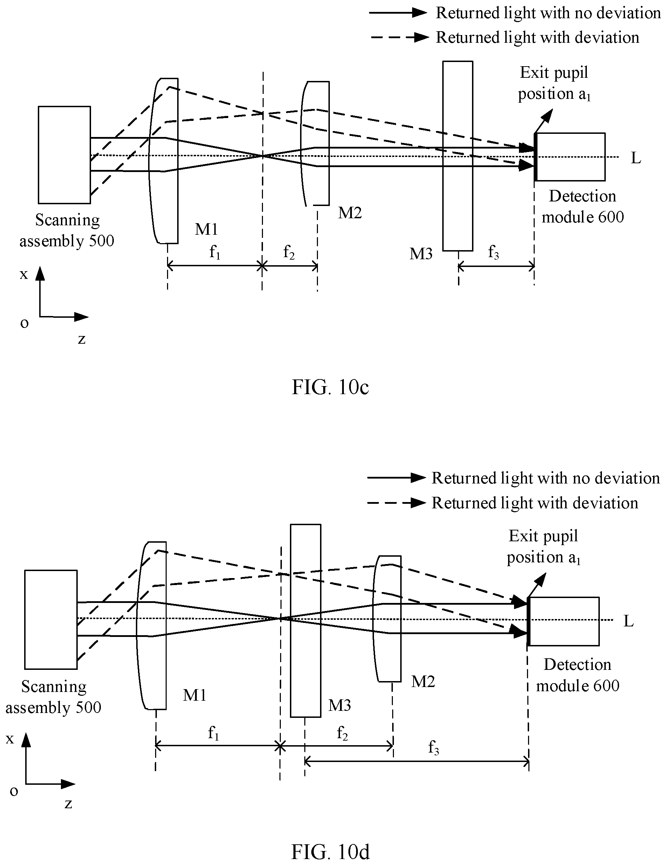

In another example, as shown in FIG. 10c, with the placement in a sequence of the first lens M1, the second lens M2, and the third lens M3, the focal length f₃ of the third lens M3 is a distance between the third lens M3 and the exit pupil plane of the first lens sub-assembly 410, and is irrelevant to the focal length f₁ of the first lens M1 and the focal length f₂ of the second lens M2.

In still another example, as shown in FIG. 10d, with the placement in a sequence of the first lens M1, the third lens M3, and the second lens M2, the focal length f₃ of the third lens M3 is a sum of a distance between the third lens M3 and the second lens M2, and a distance between the second lens M2 and the exit pupil plane of the first lens sub-assembly 410, and is irrelevant to the focal length f₁ of the first lens M1.

Further, optionally, the third lens M3 may be a cylindrical lens, for example, a convex cylindrical lens. The cylindrical lens has a capability of deflecting a light beam in a single direction. Therefore, the third lens M3 is configured as a convex cylindrical lens, and the convex cylindrical lens is configured with curvature on one or two surfaces in the second direction y, so that light beam convergence in the second direction y can be implemented.

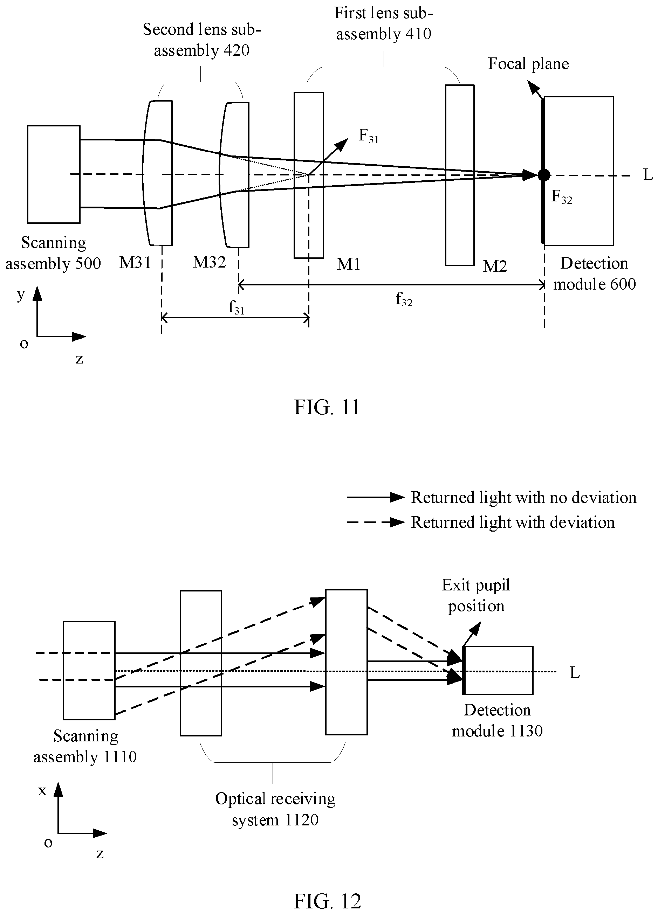

It should be noted that the foregoing describes, by using an example in which the second lens sub-assembly 420 includes one lens, lens parameters that need to be met by the lens. When the second lens sub-assembly 420 includes two or more lenses, lens parameters of these lenses may be designed with reference to the design idea of the foregoing lens. For example, the sequence of placement of the lenses shown in FIG. 7 is used as an example. As shown in FIG. 11, when the second lens sub-assembly 420 includes two lenses M31 and M32, assuming that the lens M31 is placed between the lens M32 and the scanning assembly 500, a focus F31 of the lens M31 may be configured to be greater than a distance between the lens M31 and the lens M32, and a focus F32 of the lens M32 may be configured to be located on the focal plane of the second lens sub-assembly 420. In this way, light with a large beam width first passes through the lens M31 and then focuses to the lens M32. Because a focal length of the lens M31 is after the lens M32, the light received by the lens M32 still has a beam width, and then the light with the beam width can be focused by the lens M32 to the focus F32 of the lens M32, that is, the focal plane. In this case, a distance from the lens M31 to the focal plane of the second lens sub-assembly 420 is a sum of a focal length f₃₁ of the lens M31 and a focal length f₃₂ of the lens M32 minus a distance between the lens M32 and the first lens M1. There are many possible lens combinations. These are not listed one by one in this application.

In addition, the foregoing describes only a lens structure of the second lens sub-assembly 420 configured to implement a function of converging light in the second direction y. When the second lens sub-assembly 420 is configured to implement a function of beam reduction on light in the second direction y, the second lens sub-assembly 420 includes at least two lenses. For related designs of the at least two lenses, refer to the foregoing descriptions of the first lens sub-assembly 410. A difference only lies in that the first direction x for the first lens sub-assembly 410 is replaced with the second direction y. Details are not repeated one by one in this application.

Moreover, when the first lens sub-assembly 410 is configured to implement a function of beam reduction on light in the first direction x, and the second lens sub-assembly 420 is configured to implement a function of beam reduction on light in the second direction y, the exit pupil plane (the plane that is perpendicular to the principal optical axis L and that is at the exit pupil position a₁ shown in FIG. 4a) of the first lens sub-assembly 410 and the exit pupil plane (the plane that is perpendicular to the principal optical axis L and that is at the exit pupil position a₂ shown in (B2) in FIG. 6) of the second lens sub-assembly 420 coincides, and the detection module 600 is placed on the exit pupil plane of the first lens sub-assembly 410 or the exit pupil plane of the second lens sub-assembly 420. In other words, the receiving surface of the detection module 600 coincides with both the exit pupil plane of the first lens sub-assembly 410 and the exit pupil plane of the second lens sub-assembly 420. In this way, because the exit pupil planes of the two lens sub-assemblies coincide, returned light with different deviations in the first direction x and/or the second direction y, after passing through the two lens sub-assemblies, undergoes beam reduction to a position of the exit pupil plane. As a result, the detection module 600 disposed on the exit pupil plane can receive the returned light in a same region, effectively improving reception efficiency of the detection module 600 in either the first direction x or the second direction y.

Based on the foregoing structure of the lens assembly, this application may further provide a receive module.

FIG. 12 is a diagram of an architecture of a receive module according to this application. The receive module includes a scanning assembly 1110, an optical receiving system 1120, and a detection module 1130. The optical receiving system 1120 is configured to perform beam reduction, in a first direction (the x direction shown in the figure), on light returned by the scanning assembly 1110. The detection module 1130 coincides with an exit pupil position of the optical receiving system 1120. For example, a receiving surface of the detection module 1130 is located at the exit pupil position (or an exit pupil plane) of the optical receiving system 1120. In this way, light incident to the optical receiving system 1120 undergoes beam reduction and then is emitted from a same region at the exit pupil position. Therefore, through the configuration of the detection module 1130 at the exit pupil position, no matter how large a displacement of the returned light in the first direction x is, the returned light can be incident to the detection module 1130 from the same region at the exit pupil position, thereby effectively reducing a degree to which the light beam received by the detection module 1130 is affected by a walk-off angle. In this way, the detection module 1130 can receive light returned during detection at any detection distance, improving reception efficiency of the detection module 1130. In addition, returned light with different displacements is incident to the detection module 1130 from the same region. Therefore, the detection module 1130 only needs to be assembled when the scanning assembly 1110 is in a static state, without adjusting a position of the detection module 1130 when the scanning assembly 1110 is in a rotating state, thereby further reducing assembly difficulty of the detection module 1130.

The following describes in detail the components separately in FIG. 12, to provide examples of specific implementations.

### 1. Scanning assembly

For example, the scanning assembly 1110 may be one of a polyhedral (for example, octahedral, hexahedral, or tetrahedral) rotating mirror, and a micro-electro-mechanical system (micro-electro-mechanical system, MEMS) galvo mirror or oscillating mirror. It should be noted that a type of the scanning assembly 1110 is not limited in this application, and any structure that can reflect returned light to the optical receiving system 1120 can be used.

### 2. Optical receiving system

Optionally, the optical receiving system 1120 may include the lens assembly described above, for example, the lens assembly 400 described in any embodiment in FIG. 4a to FIG. 11. For example, another optical element may be further included, for example, a plurality of lenses. The lens may be a spherical lens (such as a concave lens or a convex lens), or may be an aspherical lens. A combination of a plurality of spherical lenses and/or aspherical lenses helps improve quality of receiving returned light, thereby improving imaging quality and reducing aberration of an optical imaging system. It should be understood that the convex lens and the concave lens have a plurality of different types. For example, the convex lens includes a double-convex lens, a plano-convex lens, and a concavo-convex lens; and the concave lens includes a double-concave lens, a plano-concave lens, and a convexo-concave lens. Types of the convex lens and the concave lens are not limited in this application.

### 3. Detection module

Optionally, the detection module 1130 may include a detector. The detector is configured to receive an optical signal from the optical receiving system 1120, and convert the optical signal into an electrical signal, to implement target detection based on the electrical signal.

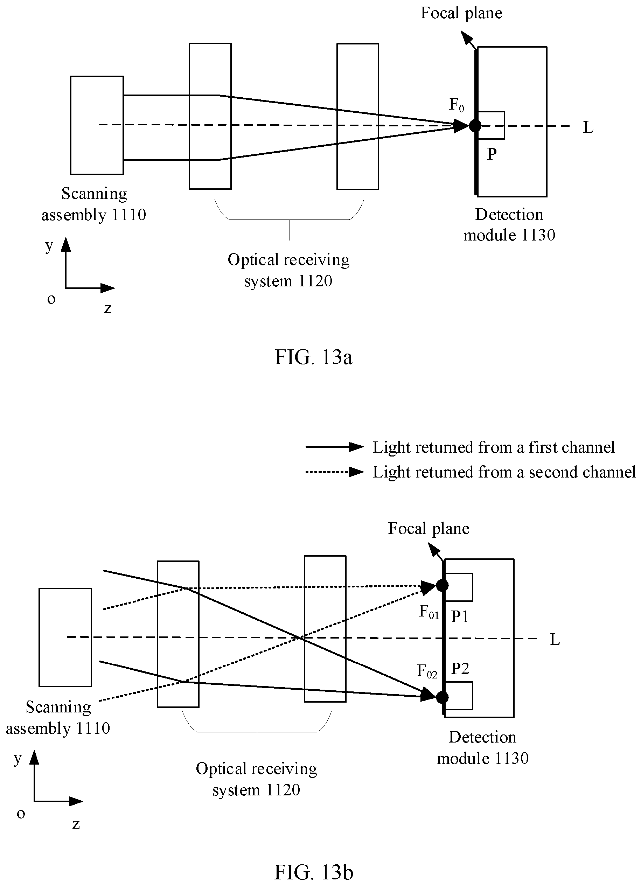

Further, optionally, FIG. 13a is a diagram of a structure of a detection module according to this application. When a detection apparatus operates in a single-channel mode, the detection apparatus emits only one beam of light in a same period of time, and returned light corresponding to this beam of light is focused by the optical receiving system 1120 (for example, the second lens sub-assembly described as above) to a position of a focus in the second direction y, for example, a focus F₀. In this case, the detection module 1130 may include only one detector (P), and a central position of the detector P is aligned with the focus F₀ on a focal plane of the optical receiving system 1120. In this way, returned light can be focused to the central position of the detector P each time, so that the detector P can receive substantially all returned light.

Further, optionally, FIG. 13b is a diagram of a structure of another detection module according to this application. When a detection apparatus operates in a multi-channel mode, the detection apparatus emits a plurality of beams of light from different directions in a same period of time. In the figure, two beams of light in different directions are used as an example. A light beam shown by a solid line corresponds to detection in a first channel, and a light beam shown by a dashed line corresponds to detection in a second channel. Returned light corresponding to the first channel is focused by the optical receiving system 1120 to a position of a focus in the second direction y, for example, a focus F₀₂, and returned light corresponding to the second channel is focused by the optical receiving system 1120 to a position of another focus in the second direction y, for example, a focus F₀₁. In this case, the detection module 1130 may include a plurality of detectors, and the plurality of detectors are arranged sequentially in the second direction y on a focal plane of the optical receiving system 1120. For example, for the two beams of light shown in the figure, the detection module 1130 may include a detector P2 and a detector P1. Receiving surfaces of the detector P2 and the detector P1 coincide with the focal plane of the optical receiving system 1120, a central position of the detector P2 is aligned with the focus F₀₂ on the focal plane of the optical receiving system 1120, and a central position of the detector P1 is aligned with the focus F₀₁ on the focal plane of the optical receiving system 1120. In this way, returned light corresponding to each channel can be received by the corresponding detector at the central position, so that a detection range of the detection module in the second direction y can be increased, and detection performance of the detection module in the second direction y can be maintained.

In a possible implementation, the detector may include a detection array, and in some scenarios, may further include an optical transmission medium. The optical transmission medium is a medium that can transmit light, and usually includes an optical fiber, a waveguide, or the like. The optical transmission medium is located between the detection array and the optical receiving system 1120, and is configured to transmit, to the detection array, light transmitted by the optical receiving system 1120, for the detection array to convert the light into an electrical signal.

It should be noted that a size of the detection array is usually large, and a size of the optical transmission medium is usually small. Therefore, when the detection apparatus performs single-channel detection, a range of a focal plane to which returned light is focused is small. Therefore, the detection module 1130 may include only one detector, and the detector may be a detection array with a small aperture, or may be a combination of an optical transmission medium and a detection array with a small aperture. Conversely, when the detection apparatus performs multi-channel detection, a range of a focal plane to which returned light is focused is large. The detection module 1130 may include only one detector, and the detector is a detection array with a large aperture. Alternatively, the detection module 1130 may include a plurality of detectors arranged in the second direction y, and each detector is a combination of an optical transmission medium and a detection array with a small aperture, or certainly may be a plurality of detection arrays with a small aperture. This is not specifically limited.

As described above, whether the detector includes a detection array or includes a detection array and an optical transmission medium may be specifically determined according to a radar ranging principle. For example, when a time-of-flight ranging principle is employed, a distance needs to be measured based on a speed and time of light propagation in air. In this case, the detector may include only a detection array, and the detection array is configured to sense arrival time of returned light, so that time of flight of the light in the air can be calculated in combination with emission time of detection light. The time of flight in combination with the light speed suffices for ranging. In another example, when an FMCW ranging principle is employed, a distance needs to be measured based on a frequency change (that is, Doppler effect) and a time difference between returned light and detection light. In this case, the detector may include an optical transmission medium and a detection array. The optical transmission medium is configured to sense a frequency of the returned light, and the detection array is configured to sense arrival time of the returned light. The frequency of the returned light and the arrival time of the returned light can be combined with a frequency of the detection light and emission time of the detection light for ranging.

In addition, when the detector includes only a detection array, the "receiving surface of the detection module" in the foregoing description is a receiving surface of the detection array, for example, a photosensitive surface of the detection array. When the detector includes both a detection array and an optical transmission medium, the "receiving surface of the detection module" in the foregoing description is a receiving surface of the optical transmission medium, for example, a surface on which a light transmission aperture of the optical transmission medium is located.

The foregoing description describes a specific structure of the receive module. The receive module can be configured to reduce a degree to which returned light, when being transmitted in the first direction, is affected by a walk-off angle. To describe more clearly a function of the receive module for reducing impact of a walk-off angle, the following provides a specific design example of the receive module.

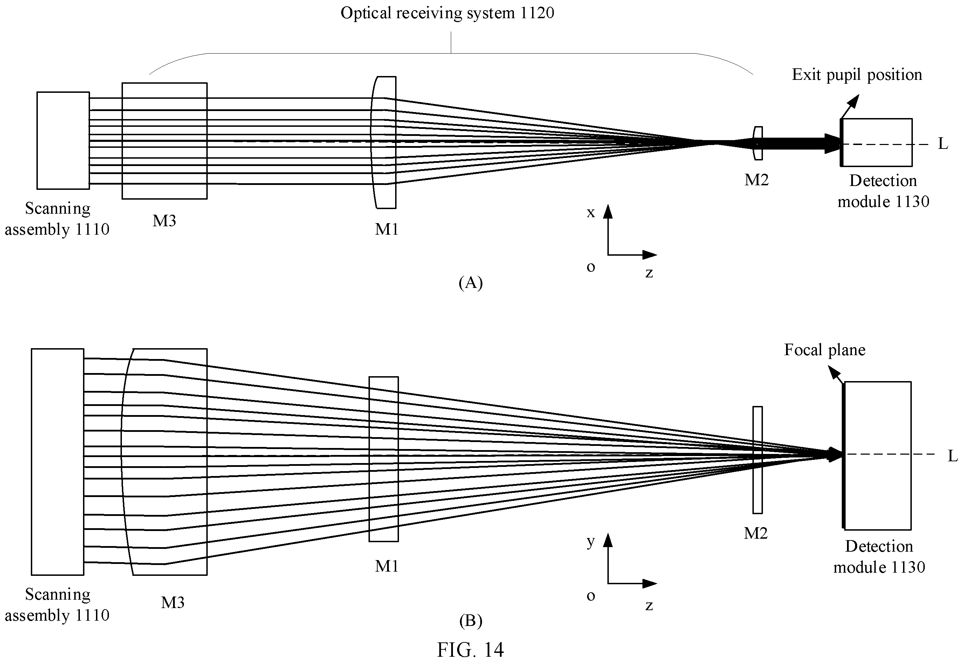

Refer to FIG. 14 and the following Table 1. FIG. 14 shows a structure and an optical transmission path of the receive module in this design. (A) in FIG. 14 shows an optical transmission path of the receive module on the xoz plane. (B) in FIG. 14 shows an optical transmission path of the receive module on the yoz plane. In this example, the lens combination shown in FIG. 7 is used in the optical receiving system 1120 in the receive module. The lens combination is configured to perform beam reduction in the x direction and perform convergence in the y direction on light returned by the scanning assembly 1110. Table 1 shows related parameters of the lenses (that is, M1, M2, and M3) in this lens combination.

**Table 1**

| Surface type | Status | Radius | Thickness | Material | Aperture | Chip region | Mechanical radius | Aspherical parameter |
|---|---|---|---|---|---|---|---|---|
| Spherical surface | | Infinite | Infinite | | Infinite | 0.000 | Infinite | 0.000 |
| Spherical surface | | Infinite | 1.400 | | 5.000 (U) | - | - | 0.000 |
| Coordinate break | Component tilt | | 0.000 | | 0.000 | - | - | |
| Annular surface | | 20.000 | 3.000 | N-BK7 | 5.200 (U) | - | - | -0.609 |
| Annular surface | | Infinite | -4.400 (T) | | 5.200 (U) | - | - | 0.000 |
| Coordinate break | Component tilt: Return | | 4.400 (P) | | 0.000 | - | - | |
| Spherical surface | | Infinite | 15.983 | | 5.200 (U) | - | - | 0.000 |
| Annular surface | | 10.000 | 1.000 | N-BK7 | 3.500 (U) | - | - | 0.000 |
| Annular surface | | Infinite | 10.306 | | 3.500 (U) | - | - | 0.000 |
| Spherical surface | | Infinite | 10.000 | | 2.452 | 0.000 | 2.452 | 0.000 |
| Annular surface | | 0.500 | 0.100 | N-BK7 | 1.500 (U) | - | - | 0.000 |
| Annular surface | | Infinite | 0.932 (V) | | 1.500 (U) | - | - | 0.000 |
| Spherical surface | | Infinite | - | | 1.500 (U) | 0.000 | 1.500 | 0.000 |

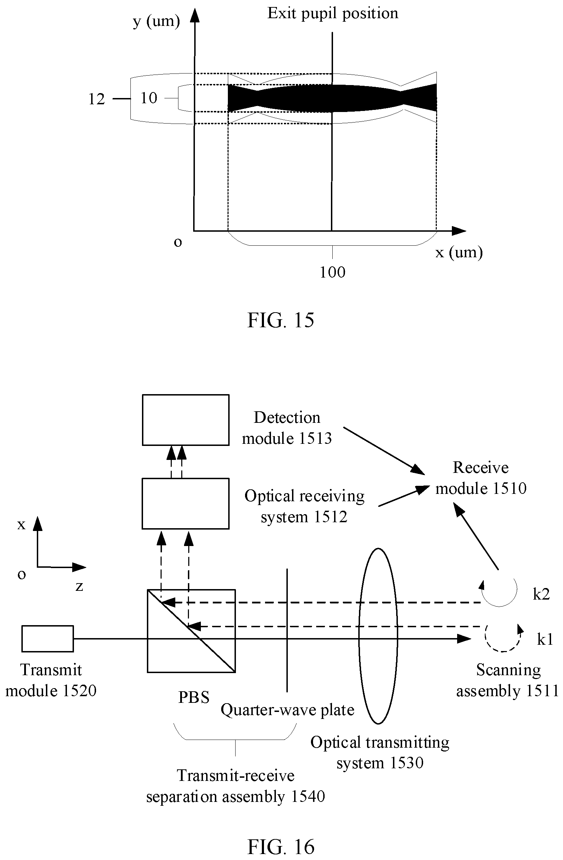

With reference to Table 1 and FIG. 14, based on the lens parameters shown in Table 1, assuming that, due to high-speed rotation of the scanning assembly 1110, returned light has a walk-off angle in the x direction ranging from 0° to 0.036° when the detection apparatus performs detection at different distances, the detection module 1130 may be disposed on an exit pupil plane, to obtain, through simulation, light spot information transmitted to the exit pupil plane at different walk-off angles, for example, a shape and size of a light spot. It is assumed that a simulation result is shown in FIG. 15. Then, as shown in FIG. 15, a blackened light spot may be understood as a light spot presented when returned light is transmitted to the exit pupil plane at a walk-off angle 0°, and a large light spot outside the blackened light spot may be understood as a light spot presented when returned light is transmitted to the exit pupil plane at a walk-off angle 0.036°. It can be learned that, on the xoy plane, when the walk-off angle is 0°, a size of the light spot at the exit pupil position is 100 um × 10 um; and when the walk-off angle changes to 0.036°, a size of the light spot at the exit pupil position changes to 100 um × 12 um. Although the returned light deviates in the x direction, after optical processing by the optical receiving system 1120, the returned light transmitted to the exit pupil plane has a same position (that is, the exit pupil position) and a same size regardless of whether the walk-off angle is 0° or 0.036°. Therefore, by predicting the exit pupil position and providing the receiving surface of the detection module 1130 at the exit pupil position, light returned at any walk-off angle can be well received by the detection module 1130. In this way, a degree to which returned light received by the detection module 1130 is affected by the walk-off angle can be effectively reduced, improving reception efficiency of the detection module 1130.

It should be noted that, in an ideal optical system, when convergence is performed in the y direction, theoretically, light with different walk-off angles in the x direction should be focused to a same position in the y direction. In other words, the light spot corresponding to 0° and the light spot corresponding to 0.036° should have a same light spot width in the y direction. However, due to a manufacturing error or another factor, there may be deviation in the y direction. For example, when a focus of one or more lenses cannot be completely aligned with a designed focus due to a manufacturing error, a light spot at a position at which the light spot should be focused may be larger or smaller than a focused light spot due to the manufacturing error. For example, in the foregoing example, there is a 2 um difference between the light spot corresponding to 0° and the light spot corresponding to 0.036° in the y direction. The 2 um difference is caused by a manufacturing error or another factor, is irrelevant to the deviation in the x direction, and may be omitted.

Based on the foregoing structure of the receive module, this application may further provide a detection apparatus.

FIG. 16 is a diagram of an architecture of a detection apparatus according to this application. The detection apparatus may be any optical apparatus including a scanning assembly and a detection module, for example, a lidar or a projector. As shown in FIG. 16, the detection apparatus may include a receive module 1510, and the receive module 1510 may be any receive module described above, for example, the receive module in FIG. 12, FIG. 13a, or FIG. 13b. For example, the receive module 1510 may include a scanning assembly 1511, an optical receiving system 1512, and a detection module 1513. The scanning assembly 1511 is configured to scan returned light to the optical receiving system 1512. The optical receiving system 1512 is configured to perform beam reduction on the received light in a first direction (the x direction shown in the figure) and then transmit the light to the detection module 1513. The detection module 1513 is configured to convert a received optical signal into an electrical signal, to perform target detection. It may be understood that the optical receiving system 1512 may further perform convergence or beam reduction on the received light in a second direction (the y direction that is not shown in the figure), or perform another possible light beam deflection. This is not specifically limited.

In a possible implementation, the detection apparatus may further include a transmit module 1520. The transmit module 1520 is configured to emit light to the scanning assembly 1511. The scanning assembly 1511 is further configured to scan the light from the transmit module 1520 to a detection region. Optionally, the light emitted by the transmit module 1520 may be continuous light or pulsed light, for example, may be continuous light emitted by the transmit module 1520 in a frequency-modulated continuous wave (frequency-modulated continuous wave, FMCM) mode.

In a further possible implementation, the detection apparatus may further include an optical transmitting system 1530. The optical transmitting system 1530 is located between the transmit module 1520 and the scanning assembly 1511, and is configured to shape the light emitted by the transmit module 1520. For example, the optical transmitting system 1530 may include a micro-nano optical element, for example, a microlens array (microlens array, MLA) or a diffractive optical element (diffractive optical element, DOE), configured to shape a light beam. A shaping manner may include but is not limited to light beam collimation and light beam homogenization. Light beam collimation means transforming a light beam into parallel light. Light beam homogenization means homogenizing energy of a light beam.

In a further possible implementation, the detection apparatus may further include a transmit-receive separation assembly 1540. The transmit-receive separation assembly 1540 is located at a position at which optical paths of the transmit module 1520, the scanning assembly 1511, and the detection module 1513 overlap, and is configured to transmit light emitted by the transmit module 1520 to the scanning assembly 1511 and transmit light returned by the scanning assembly 1511 to the detection module 1513. Through the configuration of the transmit-receive separation assembly in the optical system, emitted light and returned light can be separated, so that the transmit module and the detection module can be separated, to support the addition of the optical receiving system 1512 for beam reduction on the detection module side.

Optionally, as shown in FIG. 16, the transmit-receive separation assembly 1540 may include a PBS and a quarter-wave plate. The PBS is located at a position at which optical paths of the transmit module 1520, the scanning assembly 1511, and the detection module 1513 overlap. The quarter-wave plate is located between the PBS and the scanning assembly 1511, and may be specifically located between the PBS and the optical transmitting system 1530. During operation of the detection apparatus, linearly polarized P light emitted by the transmit module 1520 is first transmitted to the PBS, transformed by the PBS into circularly polarized P light, transmitted to the quarter-wave plate, transmitted by the quarter-wave plate to the scanning assembly 1511, and then scanned by the scanning assembly 1511 to detection space. When a target exists in the detection space, the target reflects the circularly polarized P light back to the scanning assembly 1511, and the circularly polarized P light is reflected by the scanning assembly 1511 back to the quarter-wave plate, transformed by the quarter-wave plate into circularly polarized S light, transformed by the PBS into linearly polarized S light, and reflected to the optical receiving system 1512, to separate the emitted light from the received light.

In a possible implementation, the detection apparatus may further include a control module (not shown in the figure), and the control module may be configured to process an electrical signal from the detection module 1513, to obtain information associated with the target. Further, a traveling path may be planned based on the determined information associated with the target, for example, avoiding an obstacle on an intended path and implementing autonomous driving of a vehicle.

For example, the control module may include, for example, one or more processors. The processor may be a circuit with a signal (or data) processing capability. In an implementation, the processor may be a circuit with an instruction reading and running capability, such as a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is constant or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, such as a neural network processing unit (neural network processing unit, NPU), a tensor processing unit (tensor processing unit, TPU), or a deep learning processing unit (deep learning processing unit, DPU). For example, the processor may alternatively be an application processor (application processor, AP), an image signal processor (image signal processor, ISP), another programmable logic device, a transistor logic device, a hardware component, or any combination thereof.

It should be noted that the architecture of the detection apparatus provided in FIG. 16 is merely an example. In another example, the detection apparatus may include more, fewer, or different structures, and each structure may include more, fewer, or different components. The components shown or not shown may be combined or divided in any manner. This is not specifically limited in this application.

Based on the foregoing structure and functional principle of the detection apparatus, this application may further provide a terminal device. The terminal device may include the detection apparatus in any one of the foregoing embodiments. For example, the terminal device may be a transportation means (such as a car, a truck, a motorcycle, a bus, a ship, an airplane, a helicopter, a recreational vehicle, an amusement park vehicle, a construction vehicle, an electric vehicle, a golf cart, a train, an unmanned vehicle, a smart vehicle, or a digital vehicle), a robot, a surveying and mapping device, a smart home device (such as a television, a robotic vacuum cleaner, a smart desk lamp, a sound system, a smart lighting system, an electric appliance control system, home background music, a home theater system, an intercom system, or video surveillance), a smart manufacturing device (such as an industrial device or a lawn mower), a smart transportation device (such as an AGV, an unmanned transport vehicle, or a lorry), or a smart terminal (such as a mobile phone, a computer, a tablet computer, a palmtop computer, a desktop computer, a headset, a sound box, a wearable device, an on-board device, a virtual reality device, or an augmented reality device).

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. "At least one of the following items (pieces)" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural. In text descriptions of this application, the character "/" usually indicates an "or" relationship between associated objects. In a formula of this application, the character "/" indicates a "division" relationship between associated objects. In addition, in this application, the word "example" is intended to indicate giving an example, an illustration, or a description. Any embodiment or design scheme described as an "example" in this application should not be explained as being more preferred or having more advantages than another embodiment or design scheme. Alternatively, it may be understood that the term "example" is intended to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean a sequence of performing the processes, and the sequence of performing the processes should be determined based on functions and internal logic of the processes. The terms "first", "second", and the like are intended to distinguish between similar objects without having to describe a specific order or sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

## Claims

1. A lens assembly, comprising a first lens sub-assembly, wherein the first lens sub-assembly comprises at least two lenses, and the at least two lenses are located between a scanning assembly and a detection module; and
the at least two lenses are configured to perform beam reduction, in a first direction, on light returned by the scanning assembly, wherein
the first direction is orthogonal to a principal optical axis direction.

2. The lens assembly according to claim 1, wherein the first lens sub-assembly has no focal power in a second direction, and the second direction is orthogonal to both the first direction and the principal optical axis direction.

3. The lens assembly according to claim 1 or 2, wherein the at least two lenses are convex lenses or a combination of a convex lens and a concave lens.

4. The lens assembly according to any one of claims 1 to 3, wherein the at least two lenses comprise a first lens and a second lens, the first lens is located between the scanning assembly and the second lens, and the first lens and the second lens are both convex lenses, or the first lens is a convex lens and the second lens is a concave lens.

5. The lens assembly according to claim 4, wherein the first lens and the second lens are both convex lenses, a distance between the first lens and the second lens is a sum of a focal length of the first lens and a focal length of the second lens, and the focal length of the first lens is greater than the focal length of the second lens.

6. The lens assembly according to claim 4, wherein the first lens is a convex lens and the second lens is a concave lens, a distance between the first lens and the second lens is a difference between a focal length of the first lens and a focal length of the second lens, and the focal length of the first lens is greater than the focal length of the second lens.

7. The lens assembly according to any one of claims 4 to 6, wherein the first lens and the second lens meet the following condition: $\frac{{f}_{1}}{{f}_{2}} = \frac{h}{h ′} ,$ wherein
f₁ is the focal length of the first lens, f₂ is the focal length of the second lens, h is an object height, and h' is an image height.

8. The lens assembly according to any one of claims 1 to 7, further comprising a second lens sub-assembly, wherein
the second lens sub-assembly is configured to perform convergence or beam reduction, in the second direction, on light returned by the scanning assembly, wherein
the second direction is orthogonal to both the first direction and the principal optical axis direction.

9. The lens assembly according to claim 8, wherein the second lens sub-assembly has no focal power in the first direction.

10. The lens assembly according to claim 8 or 9, wherein a focal plane or an exit pupil plane of the second lens sub-assembly coincides with an exit pupil plane of the first lens sub-assembly.

11. The lens assembly according to any one of claims 8 to 10, wherein the second lens sub-assembly comprises a third lens, and the third lens is a convex lens.

12. The lens assembly according to claim 11, wherein a focal length of the third lens is a distance between the third lens and the exit pupil plane of the first lens sub-assembly.

13. The lens assembly according to any one of claims 8 to 12, wherein the first direction is a fast axis direction, and the second direction is a slow axis direction.

14. The lens assembly according to any one of claims 1 to 13, wherein the first lens sub-assembly or the second lens sub-assembly comprises a cylindrical lens.

15. A receive module, comprising a scanning assembly, an optical receiving system, and a detection module, wherein
the optical receiving system is configured to perform beam reduction, in a first direction, on light returned by the scanning assembly, and
the detection module coincides with an exit pupil position of the optical receiving system.

16. The receive module according to claim 15, wherein the optical receiving system comprises the lens assembly according to any one of claims 1 to 14.

17. The receive module according to claim 15 or 16, wherein the detection module comprises a plurality of detectors, the plurality of detectors are arranged in a second direction, and the second direction is orthogonal to both the first direction and a principal optical axis direction.

18. The receive module according to claim 17, wherein the detector comprises an optical transmission medium and a detection array, and the optical transmission medium is located between the optical receiving system and the detection array;
the optical transmission medium is configured to transmit received light to the detection array; and
the detection array is configured to convert the received light into an electrical signal.

19. The receive module according to claim 18, wherein the optical transmission medium is an optical fiber or a waveguide.

20. The receive module according to any one of claims 15 to 19, wherein the scanning assembly is a polyhedral rotating mirror, or a micro-electro-mechanical system (micro-electro-mechanical system, MEMS) galvo mirror or oscillating mirror.

21. The receive module according to any one of claims 15 to 20, wherein the light is continuous light or pulsed light.

22. A detection apparatus, comprising the receive module according to any one of claims 15 to 21, wherein
the receive module is configured to convert a received optical signal into an electrical signal.

23. The detection apparatus according to claim 22, further comprising a transmit module, wherein
the transmit module is configured to emit light to the scanning assembly.

24. The detection apparatus according to claim 23, further comprising an optical transmitting system, wherein the optical transmitting system is located between the transmit module and the scanning assembly; and
the optical transmitting system is configured to shape light emitted by the transmit module.

25. The detection apparatus according to claim 23 or 24, further comprising a transmit-receive separation assembly, wherein
the transmit-receive separation assembly is configured to transmit, to the scanning assembly, light emitted by the transmit module, and transmit, to the detection module, light returned by the scanning assembly.

26. The detection apparatus according to any one of claims 22 to 25, further comprising a control module, wherein
the control module is configured to process an electrical signal from the receive module, to obtain information associated with a target.

27. A terminal device, comprising the detection apparatus according to any one of claims 22 to 26.
